# FASCICULE DE BREVET EUROPEEN

(11) **EP 2 632 877 B1**
(45) Date de publication et mention de la délivrance du brevet: **25.07.2018**
(21) Numéro de dépôt: 11778832.3
(22) Date de dépôt: 25.10.2011
(51) Int. Cl.: C04B 41/87

(54) **PROCÉDÉ POUR REVÊTIR UNE PIÈCE D'UN REVÊTEMENT DE PROTECTION CONTRE L'OXYDATION.**
VERFAHREN ZUR BESCHICHTUNG EINES TEILS MIT EINER OXIDATIONSSCHUTZBESCHICHTUNG
PROCESS FOR COATING A PART WITH AN OXIDATION-PROTECTIVE COATING

(30) Priorité: 25.10.2010 FR 1058711
(43) Date de publication de la demande: 04.09.2013
(73) Titulaire: Commissariat à l'Énergie Atomique et aux Énergies Alternatives, 75015 Paris (FR); Centre National de la Recherche Scientifique, 75016 Paris (FR)
(72) Inventeur: ALLEMAND, Alexandre, F-33000 Bordeaux (FR); SZWEDEK, Olivier, F-37170 Chambray-les-tours (FR); BIANCHI, Luc, F-37260 Artannes Sur Indre (FR); LE PETITCORPS, Yann, F-33850 Leognan (FR)
(74) Mandataire: Ilgart, Jean-Christophe
(86) Numéro de dépôt international: PCT/EP2011/068657
(87) Numéro de publication internationale: WO 2012/055865

(56) Documents cités:
- FR-A1- 2 932 496

## Description

### DOMAINE TECHNIQUE

L'invention a trait à un procédé pour revêtir une pièce d'un revêtement de protection contre l'oxydation.

Plus précisément, l'invention a trait à un procédé pour revêtir au moins une surface d'au moins une pièce en au moins un matériau susceptible d'être oxydé, par un revêtement de protection contre l'oxydation.

Le domaine technique de l'invention peut être défini de manière générale comme celui de la protection à l'oxydation ou PAO.

Le domaine technique de l'invention est en particulier celui de la protection contre l'oxydation à haute température, généralement à une température supérieure à 1200°C de matériaux sensibles à l'oxydation, tels que les matériaux composites et notamment les matériaux composites carbone/carbone.

### ÉTAT DE LA TECHNIQUE ANTÉRIEURE.

Les matériaux composites tels que les matériaux composites carbone/carbone (CIC) sont connus depuis plus de trente ans pour leur excellente tenue en température et leur résistance aux chocs thermiques. Ils conservent leur contrainte à la rupture et leur module à des températures supérieures à 2000°C. Cependant, dans le cadre d'une utilisation prolongée en milieu oxydant, ils perdent rapidement toute propriété mécanique, et cela dès 400°C. C'est pour pallier à ce problème majeur qu'il y a une vingtaine d'années, ont été mis au point les composites à matrice SiC et à fibres de C, tout d'abord, puis à fibres de SiC quand ces dernières furent disponibles sur le marché. Cependant, si les composites SiC/SiC ou C/SiC présentent une meilleure tenue à l'oxydation que les composites C/C, ils ne peuvent pas être utilisés à des températures supérieures à 1200°C.

Les revêtements de protection à l'oxydation des matériaux à base de C, et notamment des matériaux composites C/C peuvent être de différentes natures chimiques.

On distingue notamment les revêtements à base de métaux nobles, les revêtements à base de phosphates ; les revêtements à base d'oxyde de bore, de borates ou de borures ; les revêtements à base de carbures.

Nous nous intéressons tout d'abord aux revêtements à base de métaux nobles.

Parmi les métaux nobles, l'iridium est particulièrement intéressant en tant que protection à l'oxydation (PAO), à cause de sa température de fusion élevée (2440°C) et de sa très faible perméabilité à l'oxygène jusqu'à environ 2100°C.

Au cours des années 60, l'iridium a été particulièrement étudié dans le cadre du programme spatial des États-Unis [1]. Le principal problème qui se pose lors de l'utilisation de l'iridium afin de réaliser une PAO est l'extrême volatilité des oxydes d'iridium (IrO₂ et IrO₃).

De plus, la différence de coefficient de dilatation entre l'iridium et le carbone rend l'obtention d'une PAO adhérente difficile.

Cependant, des dépôts denses d'iridium, adhérents au carbone ont été obtenus.

Ainsi, le document [2] décrit un procédé comprenant tout d'abord le dépôt d'une barbotine de poudre d'iridium finement divisée sur un substrat en graphite, puis le chauffage du substrat de graphite revêtu à une température supérieure à 2130°C et pendant une durée suffisante pour obtenir un revêtement en iridium fondu contenant du graphite recristallisé.

Le document [3] décrit un procédé pour réaliser un revêtement en iridium sur un substrat en graphite dans lequel on dépose une barbotine de poudre d'iridium sur un substrat en graphite, puis on chauffe le substrat en graphite pour produire par frittage un revêtement d'iridium aggloméré sur ce substrat en graphite, ce revêtement présentant, par exemple, une épaisseur d'environ 60 µm. On procède ensuite à un dépôt en phase vapeur d'iridium sur le revêtement d'iridium aggloméré, par exemple par sublimation d'iridium carbonyle ou chlorocarbonyle dans une atmosphère d'oxyde de carbone sous pression réduite entre 300°C et 800°C. L'épaisseur du dépôt d'iridium ainsi réalisé est par exemple d'environ 15 µm. On réalise enfin un dépôt par galvanoplastie d'une couche d'iridium sur l'iridium déposé en phase vapeur.

Il est possible d'estimer l'épaisseur du dépôt final à environ 100 µm.

La PAO préparé dans le document [3] a été testée et elle résiste à l'oxydation dans l'air, par exemple jusqu'à 2000°C, pendant 10 minutes, sans dégradation.

Par ailleurs selon le document [1], le taux de récession de l'iridium sous air à 2000°C à pression atmosphérique est d'environ 150 pm/heure.

En conclusion, les inconvénients des PAO à base de métaux nobles comme l'iridium sont principalement le coût, et la formation d'espèces volatiles, telles que IrO₂ et IrO₃, très instables.

Une autre catégorie de revêtements de protection contre l'oxydation est constituée par les revêtements à base de phosphates.

Des émaux à base de phosphates sont souvent décrits dans la littérature, et notamment dans le document [1], pour la protection de matériaux carbonés.

Le document [4] décrit un procédé pour réaliser la protection contre l'oxydation d'un produit en matériau composite comprenant du carbone et présentant une surface céramique dans lequel on forme sur la surface céramique un revêtement externe avec une composition à base de P₂O₅-SiO₂-Al₂O₃, et après séchage, on réalise un traitement thermique à une température au moins suffisante pour transformer le revêtement externe en un ciment insoluble susceptible de former un verre auto-cicatrisant.

Ce type de protection à base de phosphates est, selon le document [1], efficace pour des températures allant jusqu'à 1000°C.

L'inconvénient principal des PAO à base de phosphates est qu'ils n'assurent une protection qu'à des températures inférieures à 1200°C.

D'autres revêtements de PAO sont les revêtements à base d'oxyde de bore, de borates ou de borures.

Les revêtements à base de borure de zirconium (ZrB₂) sont, selon le document [1], efficaces pour protéger, sur un temps très court, du graphite jusqu'à 2200°C.

L'oxyde de bore peut également être employé pour assurer la cohésion de particules réfractaires telles que ZrB₂, HfB₂ ou ZrSi₂ afin de former un revêtement imperméable à la surface du matériau. Après 10 heures sous air à 1200°C, un composite C/C revêtu d'une telle protection est, selon le document [5], toujours intègre.

L'inconvénient principal des PAO à base de borates, borures, ou oxydes de bore est qu'il y a toujours formation de B₂O₃ qui se volatilise dès 1200°C.

Les revêtements de PAO peuvent également être à base de carbures.

Le carbure de silicium (SiC) est très intéressant pour réaliser des PAO résistant à de hautes températures, par exemple supérieures à 1200°C, car il forme avec l'oxygène de l'air un oxyde qui, au-delà de 1300°C, a la plus faible perméabilité à l'oxygène de tous les oxydes [1].

De plus, dans certaines conditions de température et de pression partielle d'O₂, le SiC forme une phase vitreuse qui permet, en nappant le carbone, de boucher les pores et les fissures éventuelles.

Cette PAO semble efficace entre 1000°C et 1800°C [1] en fonction de la pression partielle d'oxygène.

Le dépôt chimique en phase vapeur (« Chemical Vapour Déposition » ou CVD en anglais) est le moyen le plus couramment employé pour déposer du SiC en vue de réaliser une PAO [1].

Le document [6] décrit des pièces en matériaux réfractaires préparés par compression à chaud de poudres de TiB₂, ZrB₂, HfB₂, NbB₂, TaB₂ ou de mélanges de ceux-ci et de 10% à 35% en volume de SiC. Un matériau préféré est préparé par compression à chaud de poudres de ZrB₂ et de SiC. Ces matériaux présentent une bonne résistance à l'oxydation, aux contraintes thermiques, et à l'ablation, et possèdent une bonne intégrité mécanique.

Le document [7] a trait à des compositions de céramique composites qui résistent à l'ablation à haute température et qui peuvent notamment être utilisées pour la protection thermique extérieure de véhicules spatiaux tels que les navettes spatiales.

Ces compositions comprennent notamment des mélanges de diborure de zirconium et de carbure de zirconium avec du carbure de silicium, des mélanges de diborure de hafnium et de carbure de hafnium avec du carbure de silicium et des mélanges de diborures et/ou carbures de zirconium et de hafnium avec du carbure de silicium.

Ces céramiques sont préparées par frittage sous pression d'un mélange de poudres à une température qui va généralement de 1850°C à 2250°C.

Différentes compositions sont testées sous différents flux thermiques.

La composition constituée de ZrC (20%vol), ZrB₂ (16%vol) et le reste de SiC, présente, sous un flux de 400W/cm², sous une pression de 0,075 atm et à une température de 2180°C, un taux d'ablation de 1,97 µm/min. Il s'agit-là du meilleur résultat obtenu dans le document [7], en condition d'oxydation active de SiC.

Le document [8] décrit un revêtement en carbure réfractaire pour une surface d'un substrat en carbone, soumise à des contraintes de température et d'abrasion telles que des cols de tuyères, des aubes de turbines, des boucliers thermiques et des « structures hypersoniques ».

Le substrat en carbone peut être en carbone pyrolytique, ou en un composite carbone-carbone.

Le revêtement est préparé en chauffant le substrat dans un four sous vide et en introduisant un halogénure d'un métal formant un carbure dans le four. Le métal forme un carbure avec le carbone sur une première partie de la surface du substrat. Ensuite, un hydrocarbure gazeux est ajouté à l'halogénure et une couche continue de carbure est ainsi formée sur la première partie.

Le carbure préféré est le carbure d'hafnium HfC, mais le carbure de silicium SiC, le carbure de tantale TaC, le carbure de zirconium ZrC, et les carbures mixtes de silicium, tantale ou zirconium avec l'hafnium sont également cités.

Cette couche de carbure résiste à la fissuration et à l'écaillage.

Il est à noter que, selon le document [1], le carbure le plus réfractaire, qui est le HfC, semble protéger le carbone jusqu'à 1300°C.

Une autre technique également utilisée pour déposer des couches de carbure est la technique dite de « pack cementation ».

Cette technique, qui est notamment décrite dans le document [9], consiste à préparer un mélange d'une poudre de métal réfractaire (par exemple du chrome), d'un oxyde de métal (par exemple de l'alumine) et d'un catalyseur (par exemple du chlorure d'ammonium).

Le mélange est ensuite mis en contact avec la pièce en carbone à revêtir, et l'ensemble formé par la pièce et le mélange est porté à une température de 1000°C sous argon. Le métal réagit alors avec le substrat pour former une couche de carbure.

L'inconvénient principal des PAO à base de carbures est qu'il est obligatoire dans ces PAO d'associer plusieurs carbures.

En effet, aucun carbure ne peut, à lui seul, assurer une tenue à une température élevée et une faible oxydation du substrat.

D'autres revêtements de PAO, encore, sont les revêtements multicouches.

En effet, d'une manière générale, une PAO constituée par un seul composé chimique est inopérante à haute température, c'est-à-dire une température généralement supérieure à 1200°C.

Il est, en effet, préférable pour pallier aux problèmes de diffusion de l'oxygène, de compatibilité avec le carbone, et d'accord des coefficients de dilatation, de réaliser une PAO multicouche ou multi séquencée.

Le document [10] décrit une structure réfractaire capable de résister de manière prolongée à des températures dépassant au moins environ 2500°F dans une environnement oxydant qui comprend un substrat composite carbone-carbone résistant aux températures élevées et un revêtement résistant à l'oxydation à haute température (à savoir une PAO) formé *in situ* sur la surface du substrat et comprenant des couches minces alternées de SiC et d'un carbure d'un métal du groupe IVB, tel que HfC ou ZrC. Ces couches alternées ont une épaisseur de 1 à 10 µm et l'épaisseur totale de la PAO est d'environ 130 à 500 µm.

La couche au contact du CIC est de préférence du SiC.

La réalisation de ces couches se fait par dépôt chimique en phase vapeur (« CVD ») à une température comprise entre environ 1090°C et 1400°C (plus précisément à une température d'environ 1198°C) sous une pression comprise entre environ 6 mbar et 666 mbar (plus précisément à une pression d'environ 26 mbar).

Le précurseur du SiC est le méthyltrichlorosilane (MTS) et celui du HfC est le tétrachlorure d'hafnium obtenu par balayage de chlore sur de l'hafnium métal à 510°C. L'alternance des couches est obtenue en ouvrant ou en coupant l'arrivée de chlore toutes les 2 minutes.

Les auteurs indiquent qu'une telle PAO protège efficacement un C/C pendant plusieurs heures à 1760°C. Pour des temps plus courts de protection, celle-ci tient jusqu'à 1930°C.

La préparation de revêtements multicouche est cependant longue, complexe et coûteuse, elle nécessite de multiples étapes et un appareillage compliqué.

Par ailleurs, on connaît la technologie du frittage à chaud avec champ électrique pulsé (« Spark Plasma Sintering » ou « SPS » en anglais) aussi connue sous la dénomination anglaise de « Field Activated Sintering Technique » ou FAST.

Les premières demandes de brevet [11], [12] concernant cette technologie ont été déposées par K. INOUE à la fin des années 1960.

Mais il a fallu attendre la fin des années 1990 pour que le nombre de brevets et publications concernant la technique de « SPS » augmente de manière exponentielle. En Europe, le nombre de machines de « SPS » n'a réellement augmenté qu'au début des années 2000.

Le « SPS » est une technique de frittage qui consiste à appliquer simultanément sur l'échantillon massif ou pulvérulent à densifier, ou sur les pièces à assembler une pression uniaxiale et des impulsions (« pulses ») de courant de forte intensité qui provoquent une montée en température de l'échantillon.

Le courant est appliqué sous la forme de trains d'impulsions de courant, par exemple d'une période de 3,2 ms, dont l'intensité peut atteindre plusieurs milliers d'ampères, par exemple jusqu'à 8000 A, voire 50000 A.

Les poudres ou pièces peuvent être en métal, céramiques ou polymères.

Le courant est appliqué à l'échantillon par l'intermédiaire d'un montage de plateaux et de pistons en graphite, la poudre par exemple est insérée à l'intérieur d'une pastilleuse en graphite.

Le montage constitué par la pastilleuse, les pistons et les plateaux est le seul, dans l'enceinte sous vide, à monter en température.

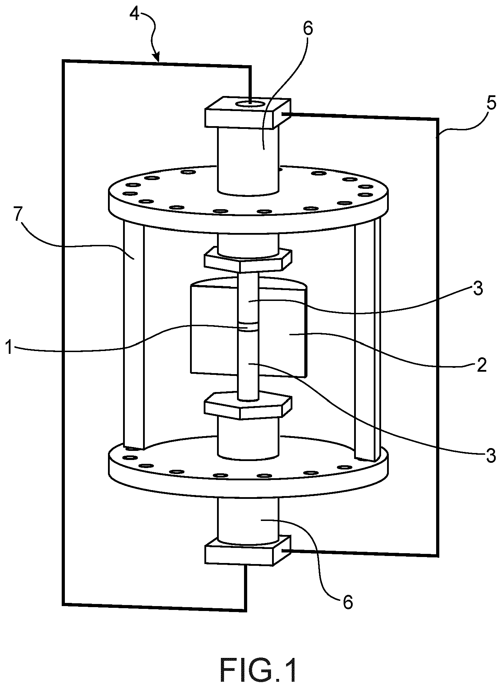

Plus exactement, on a représenté sur la Figure 1 le principe de fonctionnement d'un appareil de SPS et ses principaux organes. La poudre (1) est placée dans une chemise en graphite (2), entre deux pistons (3). Une pression (4) est appliquée à ces pistons (3), et un courant continu (5) est appliqué à des électrodes (6). La poudre (1), les pistons (3), la chemise en graphite (2) et une portion des électrodes (6) sont placés à l'intérieur d'une enceinte sous vide (7). En lieu et place de la poudre, on peut placer entre les deux pistons deux pièces en céramique à assembler de façon à avoir dans la matrice la succession piston-lère céramique-2ème céramique-piston.

La température est suivie par l'intermédiaire d'un pyromètre optique qui pilote également la puissance électrique injectée dans le montage. Comme on l'a déjà mentionné plus haut, les courants utilisés lors du frittage peuvent aller jusqu'à 50000 A.

Le principal intérêt de la technologie « SPS » est la possibilité de densifier les échantillons en des temps relativement courts de l'ordre de quelques minutes, par exemple de 5 à 10 minutes.

La rapidité de frittage permet souvent de minimiser la croissance de grains et d'atteindre pour certains matériaux une densité proche de 100%.

L'utilisation du « SPS » pour préparer un revêtement pour la PAO n'a jamais été ni décrite, ni suggérée dans l'art antérieur tel qu'il a été étudié plus haut.

En effet, cette étude de l'art antérieur met en évidence principalement trois types de procédé de préparation de revêtement de PAO, qui sont :
- les procédés dans lesquels on prépare et on dépose une barbotine sur le substrat, puis on réalise un frittage classique. Ces procédés sont illustrés notamment par le document [4] ;
- les procédés dans lesquels on réalise un mélange de poudres suivi d'un frittage par compression à chaud. Ces procédés sont illustrés notamment par le document [7] ;
- les procédés de dépôt chimique en phase vapeur (« CVD »).

Par ailleurs, le document FR-A-2 932 496 concerne un procédé de dépôt d'une barrière thermique sur un substrat métallique.

Cette barrière thermique comprend une sous-couche métallique recouvrant le substrat et une couche de céramique recouvrant ladite sous-couche.

Le procédé de ce document comprend les étapes suivantes :
- on dépose sur le substrat un premier revêtement métallique dans le but de former ladite sous-couche métallique par interdiffusion entre le substrat et le premier revêtement,
- on dépose sur le premier revêtement, un deuxième revêtement en céramique, dans le but de former ladite couche de céramique, et
- on soumet le substrat et lesdits revêtements à un frittage flash de manière à assurer la cohésion de l'ensemble.

Il existe donc au vu de ce qui précède, un besoin pour un procédé de préparation d'un revêtement de protection contre l'oxydation sur une pièce en un matériau susceptible d'être oxydé, ce revêtement étant un revêtement monocouche conférant une protection contre l'oxydation aux hautes températures, supérieures par exemple à 1200°C.

Il existe en d'autres termes, un besoin pour un procédé de préparation d'un revêtement de protection contre l'oxydation, monocouche, qui soit également réfractaire, voire très réfractaire.

Il existe en particulier un besoin pour un procédé de préparation d'un revêtement monocouche qui assure une protection efficace contre l'oxydation, aux températures élevées, de pièces en matériaux composites carbone-carbone.

Il existe encore un besoin pour un tel procédé qui soit simple, fiable, rapide, peu coûteux et qui permette d'obtenir un revêtement de qualité, dense et autant que possible exempt de fissures.

Le but de l'invention est de fournir un procédé pour préparer un revêtement de protection contre l'oxydation sur au moins une surface d'au moins une pièce en au moins un matériau susceptible d'être oxydé qui réponde entre autre à ce besoin et qui ne présente pas les inconvénients, défauts, limitations et désavantages des procédés de l'art antérieur et qui résolve les problèmes des procédés de l'art antérieur.

### EXPOSÉ DE L'INVENTION

Ce but, et d'autres encore, sont atteints, conformément à l'invention, par un procédé pour préparer un revêtement de protection contre l'oxydation sur au moins une surface d'au moins une pièce en au moins un matériau susceptible d'être oxydé. Ledit procédé est tel que décrit dans la revendication 1.

Par température ambiante, on entend généralement une température de 15°C à 30°C, de préférence de 20°C à 25°C.

Avantageusement, lors de l'étape c), on applique une pression suffisante à la pièce, et simultanément on applique un courant électrique pulsé suffisant à ladite pièce, pour élever la température de la pièce jusqu'à une température suffisante pour provoquer un frittage de la poudre sur la surface de la pièce, puis on cesse simultanément d'appliquer le courant électrique et la pression.

Avantageusement, lors de l'étape c), on applique une pression, de 0,01 à 500 MPa à ladite pièce, et simultanément, on applique un courant électrique pulsé d'une intensité de 1 à 50000 A à ladite pièce de façon à élever la température de la pièce jusqu'à une température, dite température de palier, comprise entre 1000°C et 2500°C.

Avantageusement, le matériau susceptible d'être oxydé est choisi parmi les matériaux à base de carbone tels que les matériaux composites carbone/carbone; les céramiques telles que les céramiques borures comme HfB₂, les céramiques carbures à l'exception de SiC, comme TiC, ZrC, et HfC, les céramiques nitrures comme TiN et ZrN ; les céramiques composites telles que les composites SiC/SiC ; les métaux ultraréfractaires tels que W ou Ta ; et les composites carbone/céramique tels que les composites C/SiC.

Dans une première forme de réalisation, lors de l'étape a), la première céramique peut être une céramique réfractaire et on revêt chacune des particules de la poudre de la première céramique par une première couche en une deuxième céramique qui est une céramique qui résiste à l'oxydation, différente de la première céramique.

Dans une deuxième forme de réalisation, lors de l'étape a), la première céramique est une céramique qui résiste à l'oxydation et on revêt chacune des particules de la poudre de la première céramique par une première couche en une deuxième céramique qui est une céramique réfractaire, différente de la première céramique.

Avantageusement, dans ces première et deuxième formes de réalisation, on peut revêtir en outre la première couche de la deuxième céramique -qu'il s'agisse d'une céramique réfractaire ou d'une céramique qui résiste à l'oxydation-, par une deuxième couche en un métal réfractaire.

Dans une troisième forme de réalisation, lors de l'étape a), la première céramique est une céramique qui résiste à l'oxydation, et on revêt chacune des particules de la première céramique par une première couche en un métal réfractaire.

Avantageusement, dans cette troisième forme de réalisation, on peut revêtir en outre la première couche en un métal réfractaire par une deuxième couche en une céramique qui est une céramique qui résiste à l'oxydation dans le cas où la première céramique est une céramique réfractaire ou qui est une céramique réfractaire dans le cas où la première céramique est une céramique qui résiste à l'oxydation.

On peut dans les trois formes de réalisation prévoir encore une ou plusieurs autre(s) couche(s), par exemple en céramique réfractaire, en céramique qui résiste à l'oxydation ou en métal réfractaire, sur la deuxième couche, deux couches successives étant de nature différente.

Avantageusement, la poudre en une première céramique, par exemple en une première céramique réfractaire, a une granulométrie moyenne de 1 nm à 1000 *µ*m.

Selon l'invention la céramique qui résiste à l'oxydation est différente de la céramique réfractaire.

Généralement, la première céramique qui constitue les particules est différente de la deuxième céramique qui constitue la première couche qui revêt chacune des particules.

La céramique réfractaire est choisie parmi les carbures, nitrures, borures et oxydes des métaux de transition des colonnes IVb, Vb, et VIb du tableau périodique des éléments ; les mélanges de plusieurs desdits carbures, nitrures, borures et oxydes des métaux de transition des colonnes IVb, Vb, et VIb du tableau périodique des éléments entre eux, et les mélanges d'un ou de plusieurs desdits carbures, nitrures, borures et oxydes des métaux de transition des colonnes IVb, Vb, et VIb du tableau périodique des éléments et de SiC (avec généralement une proportion minoritaire en masse de SiC) ; les céramiques composites desdits carbures, nitrures, borures et oxydes des métaux de transition des colonnes IVb, Vb, et VIb du tableau périodique des éléments entre eux, et les céramiques composites d'un ou de plusieurs desdits carbures, nitrures, borures et oxydes des métaux de transition des colonnes IVb, Vb, et VIb du tableau périodique des éléments et de SiC (avec généralement une proportion minoritaire en masse de SiC).

La céramique qui résiste à l'oxydation est choisie parmi les carbures, nitrures, borures et oxydes différents des céramiques réfractaires définies plus haut dont on a vu qu'elles étaient choisies parmi les carbures, nitrures, borures et oxydes des métaux de transition des colonnes IVb, Vb et VIb du tableau périodique des éléments (c'est-à-dire que la céramique qui résiste à l'oxydation est choisie parmi les carbures, nitrures, borures et oxydes des éléments qui ne sont pas des métaux de transition des colonnes IVb, Vb et VIb du tableau périodique des éléments) ; les mélanges de ceux-ci (de préférence entre eux) ; et les céramiques composites de ceux-ci (de préférence entre eux).

De préférence, la céramique réfractaire est choisie parmi les carbures de métaux HfC, ZrC, TiC, TaC, et WC ; les mélanges desdits carbures de métaux entre eux, et les mélanges d'un ou de plusieurs desdits carbures de métaux avec SiC (avec généralement une proportion minoritaire en masse de SiC) ; les céramiques composites desdits carbures de métaux entre eux, et les céramiques composites d'un ou de plusieurs desdits carbures de métaux avec SiC (avec généralement une proportion minoritaire en masse de SiC).

De préférence, la céramique qui résiste à l'oxydation est choisie parmi SiC et les céramiques composites de SiC (généralement avec une proportion majoritaire en masse de SiC).

Avantageusement, la couche de la deuxième céramique a une épaisseur de 1 nm à 1000 *µ*m.

Avantageusement, le métal réfractaire est choisi parmi Ti, Cr, Nb, V, Ta, Ir, Mo, Hf, Zr, Pt, Re ; leurs alliages ; et les mélanges de ces métaux et/ou alliages.

Avantageusement, la couche en un métal réfractaire a une épaisseur de 1 nm à 1000 *µ*m.

Avantageusement, lors de l'étape b) la poudre est déposée par un procédé choisi parmi la projection plasma, les procédés utilisant une suspension de la poudre ou barbotine, et la simple mise en contact de la poudre par voie sèche.

Il est important de noter que cette étape ne correspond pas à une étape de frittage mais à une simple mise en forme préliminaire de la poudre.

Cette étape assure que la poudre s'adapte à la forme, même complexe, de la surface de la pièce à revêtir, ce qui peut s'avérer très intéressant dans le cas de pièces de formes complexes à revêtir.

Avantageusement, on applique une pression de 10 à 150 MPa, de préférence de 20 à 100 MPa, mieux de 50 à 75 MPa.

Avantageusement, on applique un courant électrique pulsé d'une intensité de 1 à 50000 A, de préférence de 1000 à 3000 A.

Avantageusement, la température de palier est de 1400°C à 2000°C, de préférence à de 1600°C à 1950°C, par exemple à 1950°C.

Avantageusement, la température de palier peut être maintenue pendant une durée de 0 à 10 minutes, de préférence de 0 à 7 minutes, par exemple de 5 minutes.

Avantageusement, la durée totale du procédé peut être de 10 à 30 minutes, notamment de 20 minutes.

Avantageusement, la pièce est refroidie à une vitesse de 5°C à 600°C/min, par exemple 40°C/min, de préférence jusqu'à la température ambiante.

Avantageusement, la pression et la température sont élevées de manière progressive depuis la température ambiante et une pression de 0 MPa.

De préférence, la température peut être élevée en réalisant une rampe, ou plusieurs rampes présentant éventuellement des pentes différentes, pour arriver jusqu'à la température de frittage.

Avantageusement, la ou lesdites rampes ont une pente de 25°C à 400°C/min, par exemple de 100°C/min.

Avantageusement, la pression est élevée en réalisant une rampe, ou plusieurs rampes présentant éventuellement des pentes différentes, pour arriver jusqu'à la pression de frittage.

Avantageusement, la ou lesdites rampes ont une pente de 1 MPa/min à 20 MPa/min, de préférence de 5 à 10 MPa/min.

Avantageusement, la température et la pression peuvent être élevées de manière simultanée en une même durée.

Avantageusement, plusieurs rampes de pression et plusieurs rampes de température sont réalisées, les rampes de pression et de température correspondantes ayant la même durée.

Avantageusement, le courant électrique pulsé peut être appliqué sous la forme d'impulsions de 1 à 5 ms, par exemple de 3,3 ms de période, assemblées par trains de 1 à 15, par exemple de 12 impulsions, chaque train étant séparé par de 1 à 15 périodes, par exemple par 3 périodes.

Le revêtement monocouche réfractaire de protection contre l'oxydation a une épaisseur de 4 nm à 1000 *µ*m, de préférence de 10 nm à 600 *µ*m.

Le procédé selon l'invention se distingue fondamentalement des procédés de préparation de revêtement de protection contre l'oxydation de l'art antérieur tels que ceux qui ont été mentionnés plus haut.

Le procédé selon l'invention présente une suite spécifique d'étapes spécifiques qui n'a jamais été décrite dans l'art antérieur.

En effet, le procédé selon l'invention met en oeuvre une poudre unique, que l'on peut qualifier de poudre revêtue, constituée par des particules d'une poudre en une première céramique, ces particules étant revêtues par au moins une couche choisie parmi les couches en céramique et les couches en un métal réfractaire.

La poudre mise en oeuvre dans le procédé selon l'invention est constituée par exemple par les particules d'une poudre en une première céramique réfractaire revêtue par une couche en une seconde céramique qui résiste à l'oxydation, différente de la première céramique, et non un mélange de poudres comme par exemple dans le document [7].

Comme on l'a déjà mentionné plus haut, cette poudre peut être directement placée sur le matériau à revêtir ou bien appliquée sous forme d'une barbotine ou bien projetée par projection plasma, cela dans le but de revêtir des pièces de formes complexes.

Ensuite, le procédé selon l'invention réalise le frittage de cette poudre spécifique par un procédé de « SPS ». L'utilisation de la technique de « SPS » pour réaliser un tel frittage d'une telle poudre et préparer un revêtement de PAO, qui plus est un revêtement de PAO réfractaire, n'a jamais été décrit ni suggéré dans l'art antérieur.

Le procédé selon l'invention, du fait qu'il utilise une poudre unique, spécifique, frittée par un procédé spécifique de « SPS », permet pour la première fois de préparer un revêtement monocouche présentant une structure spécifique qui est une microstructure tridimensionnelle.

Ce revêtement, présentant cette structure spécifique, fournit, tout en n'étant constitué que d'une seule couche, une protection contre l'oxydation qui est efficace à haute température, alors que jusqu'à présent, il était nécessaire d'avoir recours à un revêtement multicouche pour que la protection contre l'oxydation soit aussi efficace à haute température, à savoir généralement supérieure à 1200°C.

Le procédé selon l'invention comporte un nombre limité d'étapes, simples, et faciles à mettre en oeuvre.

Le procédé selon l'invention est beaucoup plus simple, beaucoup moins long, et beaucoup moins coûteux qu'un procédé de préparation d'un revêtement multicouche.

En résumé, le procédé selon l'invention ne présente pas les inconvénients, défauts, limitations et désavantages des procédés de l'art antérieur et apporte une solution aux problèmes des procédés de l'art antérieur.

Notamment, le procédé selon l'invention par rapport aux trois principaux types de procédés de préparation de PAO mentionnés plus haut présente les avantages suivants :
- il est facile à mettre en oeuvre ;
- il permet l'obtention de dépôts denses ;
- les dépôts obtenus possèdent une microstructure particulière, par exemple avec des particules réfractaires individuellement entourées d'une céramique présentant une bonne tenue à l'oxydation.

Le revêtement obtenu par le procédé selon l'invention est un revêtement de protection contre l'oxydation, réfractaire, voire très réfractaire, non fissuré, et dense, par exemple avec une densité supérieure ou égale à 94%, voire supérieure ou égale à 96%, en particulier lorsque la poudre comprend une ou plusieurs couche(s) supplémentaire(s) en un métal réfractaire.

En d'autres termes, le procédé selon l'invention peut être défini comme un procédé dans lequel on prépare tout d'abord une poudre spécifique, par exemple en revêtant une poudre céramique réfractaire par un revêtement ayant une bonne tenue à l'oxydation, ou vice et versa (c'est-à-dire que l'on revêt une poudre ayant une bonne tenue à l'oxydation, par exemple une poudre de SiC, par un revêtement constitué par une couche de céramique réfractaire, par exemple une couche de HfC), puis on fritte cette poudre revêtue spécifique, directement sur le matériau à protéger par un procédé de frittage spécifique qui est le frittage par champ électrique pulsé.

Ce procédé permet de manière étonnante, et pour la première fois, de cofritter directement la protection à l'oxydation sur le matériau à protéger.

Le revêtement de protection contre l'oxydation obtenu par ce procédé présente, une microstructure tridimensionnelle spécifique, alliant la tenue à l'oxydation à l'ultraréfractarité ; cette microstructure originale est due, de manière inhérente, au procédé qui a été utilisé pour la préparer qui met en oeuvre une poudre « composite » spécifique et un procédé de frittage spécifique.

Il n'est pas possible d'obtenir cette microstructure tridimensionnelle spécifique unique par un autre procédé que le procédé de l'invention, par exemple par dépôt chimique en phase vapeur CVD car, comme le montre le document [10], le dépôt chimique en phase vapeur ne peut produire qu'un empilement de couches en 2D.

On peut dire que le revêtement de PAO obtenu par le procédé selon l'invention à microstructure tridimensionnelle combine de manière synergique deux propriétés avantageuses, à savoir la réfractarité et la tenue à l'oxydation.

Encore en d'autres termes, le procédé de préparation d'un revêtement de PAO selon l'invention consiste à fritter directement sur la pièce à protéger une poudre spécifique constituée par exemple selon le premier mode de réalisation d'un coeur réfractaire, par exemple en HfC, revêtu d'une couche ayant un bonne tenue à l'oxydation, par exemple une couche en SiC, elle-même revêtue éventuellement d'une couche métallique, par exemple en titane.

Il a été effectivement montré sur un substrat de C, ou de C/C, qu'un tel revêtement de PAO fritté sous champ électrique pulsé était dense (densité supérieure ou égale à 94%, voire à 96%) et non fissuré.

La microstructure obtenue est tridimensionnelle et permet d'isoler totalement la céramique réfractaire, par exemple le carbure réfractaire, tel que HfC, sensible à l'oxygène, par un composé, tel que SiC moins oxydable.

Ou bien, le procédé selon l'invention consiste selon le deuxième mode de réalisation, à fritter directement sur la pièce à protéger une poudre constituée d'un coeur ayant une bonne tenue à l'oxydation, revêtue d'une couche réfractaire, elle-même revêtue éventuellement d'une couche métallique, par exemple en titane.

Lorsque le substrat est en un matériau tel qu'un matériau composite C/C, le procédé selon l'invention permet d'allier aux propriétés thermostructurales des composites une protection contre l'oxydation efficace à haute température, à savoir généralement supérieure à 1200°C.

D'autres caractéristiques et avantages de l'invention ressortiront mieux à la lecture de la description qui va suivre, donnée à titre illustratif et non limitatif en référence aux Figures annexées dans lesquelles :

### BRÈVE DESCRIPTION DES DESSINS

- La Figure 1 est une vue schématique en coupe verticale d'un exemple d'appareil de SPS pour la mise en oeuvre du procédé selon l'invention ;
- Les Figures 2A et 2B présentent des micrographies réalisées au microscope électronique à balayage (MEB) obtenues par électrons rétrodiffusés, de la poudre de HfC revêtue de SiC préparée dans l'exemple 1. L'échelle représentée sur la Figure 2A est de 30 µm et l'échelle représentée sur la Figure 2B est de 500 µm ;
- La Figure 3 est un graphique qui présente les résultats d'une analyse en spectroscopie Auger d'un grain de la poudre de HfC revêtue de SiC préparée dans l'exemple 1, ledit grain étant un grain où le dépôt de SiC n'est pas visible au microscope électronique à balayage.
   En abscisse est portée la profondeur de décapage (en nm) et en ordonnée, est porté le pourcentage atomique (%).
   Les courbes A, B, C, D représentent les concentrations respectives en C, Hf, Si, et O.
- La Figure 4 est un graphique qui présente les résultats d'une analyse en spectroscopie Auger d'un grain de la poudre de HfC revêtue de SiC préparée dans l'exemple 1, ledit grain étant un grain où le dépôt de SiC est visible au microscope électronique à balayage.
   En abscisse est portée la profondeur de décapage (en nm) et en ordonnée, est porté le pourcentage atomique (%).
   Les courbes A, B, C, D représentent les concentrations respectives en C, Hf, Si, et O.
- La Figure 5 est une micrographie réalisée au microscope électronique à balayage (MEB) de l'échantillon préparé dans l'exemple 1, dans lequel une poudre de HfC revêtue de SiC, a été frittée sur un substrat carboné par « SPS » à 1950°C. La micrographie de la Figure 5 a été réalisée avec un grossissement de 200, et l'échelle représentée sur la Figure 5 est de 150 µm.
- La Figure 6 est un graphique qui présente l'analyse en spectroscopie Auger d'un grain de la poudre de HfC revêtue de SiC revêtue de titane préparée dans l'exemple 1.
   En abscisse est portée la profondeur de décapage (en nm) et en ordonnée est porté le pourcentage atomique (%).
   Les courbes A, B, C, D et E représentent les concentrations respectives en C, Hf, Ti, O, et Si.
- Les Figures 7A, 7B, et 7C présentent des micrographies réalisées au microscope électronique à balayage (MEB) obtenues par électrons rétrodiffusés, de l'échantillon préparé dans l'exemple 2, dans lequel une poudre de HfC revêtue de SiC revêtue de titane, a été frittée sur un substrat carboné par « SPS » à 1950°C, pour former une PAO sur ledit substrat.
   La micrographie de la Figure 7A a été réalisée avec un grossissement de 50, et l'échelle représentée sur la Figure 7A est de 1 mm.
   La micrographie de la Figure 7B a été réalisée avec un grossissement de 200, et l'échelle représentée sur la Figure 7B est de 300 µm.
   La micrographie de la Figure 7C a été réalisée avec un grossissement de 1500, et l'échelle représentée sur la Figure 7C est de 40 µm.

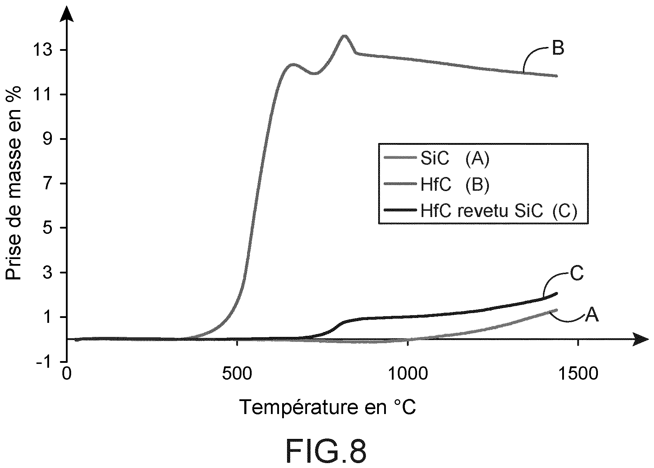

- La Figure 8 est un graphique qui présente les résultats des analyses thermogravimétriques différentielles réalisées sur une poudre de SiC brute, sans revêtement (courbe A), sur une poudre de HfC brute, sans revêtement (courbe B), et sur la poudre de HfC revêtue de SiC préparée dans l'exemple 1 (courbe C) .

En abscisse est portée la température (en °C), et en ordonnée, est portée la prise de masse (en %).

### EXPOSÉ DÉTAILLÉ DE MODES DE RÉALISATION PARTICULIERS.

Dans la description qui suit, la première forme de réalisation préférée du procédé selon l'invention sera plus particulièrement décrite, toutefois, l'homme du métier pourra facilement adapter les informations fournies dans ce qui suit aux autres modes de réalisation préférés du procédé selon l'invention.

Dans cette première forme de réalisation préférée, lors de l'étape a), la première céramique est une céramique réfractaire et on revêt chacune des particules de la poudre de la première céramique par une première couche en une deuxième céramique qui est une céramique qui résiste à l'oxydation, différente de la première céramique.

Par « céramique réfractaire », on entend généralement une céramique qui possède une température de frittage supérieure à 1300°C.

La première céramique réfractaire peut être choisie parmi les céramiques oxydes, les céramiques nitrures, les céramiques borures, les céramiques carbures, leurs mélanges, et les céramiques composites de celles-ci, mentionnées plus haut.

Avantageusement, la première céramique réfractaire est choisie parmi les carbures de métaux tels que HfC, ZrC, TiC, TaC, WC ; leurs mélanges, c'est-à-dire les mélanges de plusieurs desdits carbures métalliques entre eux, et les mélanges d'un ou de plusieurs desdits carbures métalliques et de SiC (avec généralement une proportion minoritaire en masse de SiC) ; et les céramiques composites desdits carbures métalliques, c'est-à-dire les céramiques composites de plusieurs desdits carbures métalliques entre eux, et les céramiques composites d'un ou de plusieurs desdits carbures métalliques et de SiC (avec généralement une proportion minoritaire en masse de SiC).

La première céramique peut même être qualifiée de céramique « ultraréfractaire ».

Une telle céramique ultraréfractaire présente généralement une température de frittage supérieure à 1300°C.

Un exemple d'une telle céramique ultraréfractaire est le HfC.

La poudre en une première céramique réfractaire a généralement une granulométrie moyenne de 1 nm à 1000 µm, de préférence de 3 µm à 50 µm.

La deuxième céramique est une céramique qui résiste à l'oxydation, en d'autres termes qui présente une bonne tenue à l'oxydation.

Par « céramique qui résiste à l'oxydation », on entend généralement une céramique qui présente une faible perte ou prise de masse en présence d'une pression partielle d'oxygène et en température.

Cette faible perte ou prise de masse en présence d'une pression partielle d'oxygène et en température change selon les céramiques et peut être déterminée par l'homme du métier.

Par exemple HfC seul, sous oxydation, se transforme rapidement dès 400°C en HfO₂ qui est poreux avec un gain de masse.

En revanche, SiC se passive en formant à sa surface une couche de SiO₂ liquide (verre) qui est une barrière à la diffusion de l'oxygène, et SiC est donc protégé par sa couche de SiO₂.

Dans le cas de SiC qui résiste bien à l'oxydation, il y aura donc une variation de masse mais très faible par rapport à celui de HfC.

Une définition plus précise pourrait donc être la suivante : une céramique carbure, nitrure ou borure qui résiste bien à l'oxydation est une céramique qui, traitée sous air à des températures comprises entre 400°C et la température de fusion ou de décomposition de cette céramique présente à sa surface une couche passivant d'oxyde associé (par exemple SiO₂ pour SiC) qui empêche ou ralentit toute diffusion de l'oxygène vers la céramique.

La deuxième céramique peut être généralement choisie parmi les céramiques carbures, les céramiques nitrures, les céramiques borures, les céramiques oxydes, (on peut imaginer revêtir HfC par SiO₂ par exemple) ; leurs mélanges ; et les céramiques composites de celles-ci, mentionnées plus haut.

Parmi les céramiques carbures, on peut citer par exemple SiC.

Il est en outre avantageux de choisir en tant que deuxième céramique, une céramique qui présente un équilibre thermodynamique avec la première céramique quelle que soit la température.

L'homme du métier, en faisant éventuellement appel aux données disponibles dans la littérature saura facilement déterminer pour une première céramique donnée, les secondes céramiques qui remplissent ces conditions d'équilibre thermodynamique.

A titre d'exemple, la poudre revêtue peut être une poudre d'une céramique ultraréfractaire, par exemple de HfC, revêtue par du SiC qui présente un bonne tenue à l'oxydation et un équilibre thermodynamique avec HfC quelle que soit la température, par exemple entre 500°C et 2850°C.

Généralement, la couche de la deuxième céramique (quelle qu'elle soit réfractaire ou résistante à l'oxydation) a une épaisseur de 1 nm à 1000 µm, de préférence de 10 nm à 10 µm.

Pour revêtir les particules de la poudre en première céramique réfractaire, par la couche de la seconde céramique qui résiste à l'oxydation, on peut utiliser toute technique permettant de déposer une couche de l'épaisseur souhaitée, et notamment de l'épaisseur précisée ci-dessus. Ces techniques doivent de préférence permettre d'obtenir des dépôts homogènes, fins et adhérents.

Parmi ces techniques, on peut citer la technique de dépôt chimique en phase vapeur (« CVD »), en particulier la technique de dépôt chimique en phase vapeur en lit fluidisé, la technique sol-gel, la technique de lyophilisation (« Freeze Drying »).

L'homme du métier saura choisir les précurseurs adéquats pour réaliser les dépôts par CVD. A titre d'exemple, un précurseur du SiC est l'hexaméthyldisilane.

Avantageusement, on peut revêtir en outre la couche de la seconde céramique par une couche en un métal réfractaire, en d'autres termes, la poudre mise en oeuvre dans le procédé selon l'invention peut également comporter en plus du revêtement de la seconde céramique tel que décrit plus haut, un revêtement métallique réfractaire.

Par « métal réfractaire », on entend généralement un métal qui possède une température de frittage supérieure à 1000°C.

Par « métal ultraréfractaire », on entend généralement un métal qui possède une température de frittage supérieure à 1600°C.

Le métal réfractaire peut être choisi parmi Ti, Cr, Nb, V, Ta, Ir, Mo, Hf, Zr, Pt, Re ; leurs alliages ; et les mélanges de ces métaux et/ou alliages.

Avantageusement, la couche en un métal réfractaire a une épaisseur de 1 nm à 1000 µm, de préférence de 10 nm à 3 µm.

La couche éventuelle en un métal réfractaire est généralement déposée par une technique analogue à celle utilisée pour le dépôt de la couche de la seconde céramique, par exemple par CVD. L'homme du métier saura choisir les précurseurs adéquats pour réaliser les dépôts de métal par CVD.

La couche de métal réfractaire permet entre autres de faciliter le frittage (des particules de poudre entre elles), et assure l'adhésion avec le substrat. Dans le cas de substrats à base de carbone, et notamment de substrats en composite carbone/carbone (« C/C »), cette couche supplémentaire de métal réfractaire forme en outre « *in fine* », un carbure réfractaire par carburation avec le carbone, notamment avec le carbone du composite C/C.

Une poudre préférée comprend des particules de céramique réfractaire, voire ultraréfractaire, par exemple de HfC, revêtues d'une couche de céramique ayant une bonne tenue à l'oxydation, par exemple une couche de SiC, cette couche étant à son tour recouverte d'une couche d'un métal réfractaire, par exemple une couche de Titane.

En fonction des applications visées, l'homme du métier pourra facilement choisir la couche de céramique et la couche métallique éventuelle adéquates. La poudre de la première céramique peut recevoir une grande variété de couches de seconde céramique et éventuellement de couches métalliques.

Sur la couche en métal réfractaire peuvent être encore déposées d'autres couches, par exemple de 1 à 100 couches choisies parmi les couches en céramique, par exemple en céramique réfractaire ou en céramique qui résiste à l'oxydation, et les couches en métal réfractaire.

Généralement dans le revêtement des particules, deux couches successives sont de nature différente.

La description qui a été faite plus haut concernant la nature de la céramique réfractaire, de la céramique qui résiste à l'oxydation, et du métal réfractaire ; la granulométrie de la première poudre, les épaisseurs des couches; les techniques de dépôt des couches etc. s'applique *mutatis mutandis* aux autres modes de réalisation.

Par exemple, l'épaisseur d'une couche métallique se situe dans la plage donnée plus haut, que cette couche soit par exemple la première ou la deuxième.

Selon l'invention, on procède ensuite au dépôt de la poudre sur la surface de la pièce par tout procédé adéquat.

La poudre peut ainsi être déposée par un procédé choisi parmi la projection plasma, les procédés utilisant une suspension de la poudre ou barbotine, ou encore par simple mise en contact de la poudre par voie sèche directement avec la surface à revêtir.

Le dépôt de la poudre par trempage de la pièce dans une barbotine ou par projection plasma de la poudre est bien adapté aux pièces de formes complexes.

On procède ensuite au frittage de la poudre ainsi préparée, sur la surface d'une pièce à revêtir par un revêtement de PAO.

Selon l'invention, la pièce à revêtir est généralement en un matériau susceptible d'être oxydé.

Par matériau « susceptible d'être oxydé » ou « matériau sensible à l'oxydation », on entend généralement, au sens de l'invention un matériau dont la perte ou le gain de masse est significatif après un traitement thermique en présence d'oxygène par opposition à un matériau, tel qu'une céramique, qui résiste à l'oxydation tel qu'il a été défini plus haut notamment en relation avec le concept de formation d'une couche passivante.

Le matériau susceptible d'être oxydé est généralement choisi parmi les matériaux à base de carbone tels que les matériaux composites carbone/carbone ; les céramiques telles que les céramiques borures comme HfB₂, les céramiques carbures à l'exception de SiC comme TiC, ZrC, et HfC, les céramiques nitrures comme TiN et ZrN ; les céramiques composites telles que les composites SiC/SiC ; les métaux ultraréfractaires tels que W ou Ta ; et les composites carbone/céramique tels que les composites C/SiC.

Par « matériau à base de carbone », on entend généralement un matériau qui comprend plus de 50%, de préférence plus de 80%, de préférence encore plus de 90% en masse de carbone, mieux 100% en masse de carbone.

La pièce à revêtir peut avoir une forme et une taille quelconques, à la condition toutefois qu'elle puisse être disposée dans une machine de « SPS ».

Selon l'invention, ce frittage est réalisé par la technique de « SPS ».

Il a en effet été mis en évidence, selon l'invention, qu'il était possible, en mettant en oeuvre, la technique de « SPS » de cofritter directement la poudre sur le matériau à protéger.

Le procédé selon l'invention est généralement mis en oeuvre dans une machine, dispositif de frittage à chaud par champ électrique pulsé (« SPS ») classique, tel que par exemple celui décrit sur la Figure 1.

On commence généralement par placer la pièce à l'intérieur de la matrice, pastilleuse, chemise en graphite de la machine, dispositif de « SPS », puis on place la poudre préparée comme cela a été décrit plus haut, directement sur la surface à revêtir de la pièce.

Généralement, on place du graphite souple tel que le produit commercialisé sous la dénomination commerciale de PAPYEX® par la société Carbone Lorraine entre la poudre et les pistons.

La pastilleuse, matrice, chemise en graphite et les pistons sont ensuite placés dans la machine de SPS.

On applique une pression suffisante à ladite pièce, et simultanément, on applique un courant électrique pulsé suffisant à ladite pièce pour élever la température de la pièce jusqu'à une température suffisante pour provoquer un frittage de la poudre sur la surface de la pièce.

En d'autres termes, lorsque tout est en contact (pastilleuse, pistons, pièce), on peut générer un courant électrique afin de créer l'élévation de température. De manière générale, l'ampérage maximal que peut supporter une matrice est lié notamment à son diamètre. Ainsi, pour un diamètre d'échantillon de 8 mm, on peut appliquer 2000 A sans risquer de détériorer la matrice. Pour des diamètres plus importants tels que 20 mm, on peut appliquer 4000 A ou plus.

Le courant électrique pulsé appliqué est généralement de 1A à 50000A afin de créer une élévation de température jusqu'à une température (température de palier) comprise entre 1000°C et 2500°C. La pression qui est appliquée en même temps correspond à une force appliquée de 0,01 MPa à 500 MPa.

De préférence, la pression appliquée est selon l'invention généralement de 1 à 200 MPa et l'intensité appliquée est de préférence de 500 à 8000 A. De préférence, la pression est de 10 à 150 MPa, de préférence encore de 20 à 100 MPa, mieux de 50 à 75 MPa.

De préférence encore, l'intensité est de 500 à 6000 A, de préférence encore de 1000 à 3000 A.

Les valeurs de pression et d'intensité sont choisies à l'intérieur des plages ci-dessus de façon à ce que la température de la poudre (et/ou du substrat) s'élève à une température (température de palier) permettant le frittage de la poudre sur la surface de la pièce/substrat, une telle température est généralement de 1000°C à 2500°C, de préférence de 1400°C à 2000°C, de préférence encore à de 1600°C à 1950°C, par exemple de 1950°C.

La durée pendant laquelle est maintenue ladite température (encore appelée température de palier) par exemple de 1950°C, durée que l'on peut nommer aussi durée ou temps de palier est généralement de 0 à 10 minutes, de préférence de 0 à 7 minutes, par exemple de 5 minutes.

Lorsque le temps de palier est égal à 0, cela signifie que l'on effectue une montée en température jusqu'à la température maximale et que l'on redescend à la température ambiante sans qu'un palier soit observé.

On notera que cette durée de palier est dans tous les cas très faible, au regard des autres méthodes de frittage.

De même, le temps de cycle hors refroidissement, et la durée globale, totale du cycle complet avec le refroidissement, sont réduits.

Ce temps de cycle est par exemple de 10 à 30 minutes, notamment de 20 à 22 minutes seulement, et la durée du cycle complet est d'environ une heure, ce qui constitue un autre avantage du procédé selon l'invention.

Il est important de maîtriser la descente en température et en pression afin d'éviter la fissuration du revêtement de PAO.

Le refroidissement de la pièce revêtue est généralement effectué de manière pas trop brutale comme peut le comprendre l'homme du métier dans ce domaine de la technique. Ainsi, on observera généralement une vitesse de refroidissement de 1 à 600°C par minute, par exemple de 10 à 100°C/min depuis le palier de température.

De préférence, le refroidissement est effectué par rampes successives présentant des pentes différentes, ainsi le refroidissement peut s'effectuer par exemple comme suit : 45°C/min de la température de palier à 600°C ; puis refroidissement selon l'inertie de la machine de 600°C à l'ambiante.

Il est évident pour l'homme du métier, que le cycle température-pression est à optimiser pour chaque type de poudre mise en oeuvre. En revanche, quelles que soient les montées, les descentes ou les durées des paliers en température et en pression, la simultanéité de la température et de la pression est indispensable au bon frittage de la poudre.

Avantageusement, les paramètres de température et donc d'intensité, et de pression (ou de force appliquée, la pression dépendant de la surface d'appui suivant la relation bien connue P = F/S) ne sont pas, depuis la température ambiante et une pression de 0 MPa, appliqués de manière brutale, instantanée, mais sont élevés de manière progressive depuis la température ambiante et une pression de 0 MPa.

Pour la température (régie par l'intensité), on réalisera ainsi de préférence une montée progressive avec une rampe, ou plusieurs rampes présentant éventuellement des pentes différentes pour arriver jusqu'à la température maximale mentionnée plus haut, encore appelée température de palier ou de frittage.

La ou lesdites rampes de température ont préférentiellement une pente de 50°C à 200°C/min, par exemple de 100°C/min.

Pour la pression, on pourra, de la même manière, avantageusement réaliser une montée progressive avec une rampe, ou plusieurs rampes présentant éventuellement des pentes différentes, pour arriver jusqu'à la pression maximale indiquée plus haut, encore appelée pression de palier ou de frittage.

La ou lesdites rampes de pression ont généralement une pente de 1 MPa/min à 20 MPa/min, de préférence de 5 à 10 MPa/min.

La montée en température et la montée en pression qu'elles soient progressives ou non, se font de préférence de manière simultanée, concomitante, en une même durée.

Si plusieurs rampes de pression et plusieurs rampes de température sont réalisées, les rampes de pression et de température correspondantes ont de préférence la même durée.

En appliquant les paramètres de température (et donc d'intensité) et/ou de pression (et donc de force appliquée) de manière progressive et non de manière brutale, soudaine, instantanée, on évite ainsi de soumettre la pièce, notamment la pièce en céramique réfractaire à des contraintes trop fortes et aucune cassure de la pièce n'est à déplorer.

De manière particulièrement étonnante, il a été mis en évidence par les inventeurs que les résultats étaient meilleurs et que le frittage obtenu d'encore meilleure qualité si l'on appliquait la pression (ou force) nécessaire pour réaliser le frittage uniquement après une montée en température significative depuis la température ambiante, généralement jusqu'à une température permettant à la surface de la pièce et à la poudre d'être ramollies, d'être plus molles, sous l'effet de cette température. Cette manière de procéder s'applique en particulier au cas où la couche extérieure de la poudre est soit en un métal, soit en SiC.

Cette température à laquelle se produit un ramollissement de la poudre ou de la surface de la pièce est une température qui est inférieure à la température de palier, de frittage, définie plus haut mais qui doit être suffisante pour permettre ledit ramollissement ; généralement cette température est inférieure de 50°C à 300°C, de préférence de 100°C à 250°C, de préférence encore de 150°C à 200°C, à la température de palier, de frittage, définie plus haut.

Le ramollissement des surfaces en contact sous l'effet de la température permet aux surfaces de mieux se comporter lors du frittage.

Par exemple dans le cas où ladite température de palier est de 1950°C, on élève progressivement la température de la poudre et de la pièce jusqu'à environ 1850°C, de préférence par deux rampes de températures successives, et on élève de même progressivement la pression (force) appliquée aux pièces de façon à ce que la pression (ou pression de palier) permettant le frittage effectif de la poudre sur la surface de la pièce, à savoir une pression de 75 MPa (pour une force appliquée de 13,2 kN sur une surface à revêtir de 15 mm de diamètre), soit appliquée seulement lorsque la température des pièces a atteint 1850°C.

A titre d'exemple, une montée en température, depuis la température ambiante (généralement 20°C à 25°C) jusqu'à 1950°C, pourra s'effectuer de la manière suivante :
- température ambiante à 300°C : 1 à 2 minutes environ ;
- 300°C à 600°C : 3 minutes ;
- 600°C à 1850°C : 12 minutes ;
- 1850°C à 1950°C : 2 minutes ;
- palier à 1950°C pendant 5 minutes ;
- refroidissement de 1950°C à 600°C : 30 minutes ;
- refroidissement de 600°C à la température ambiante : durée conditionnée par l'inertie thermique de la machine, par exemple de 10 minutes à 30 minutes.

Pendant le même temps, la pression évolue de la manière suivante :
- de 0 à 5,3 kN 25 MPa: montée en 1 minute ;
- palier à 5,3 kN 25 MPa: 15 minutes ;
- de 5,3 kN 25 MPa à 13,2 kN 75MPa: montée en 1 minute ;
- palier à 13,2 kN 75 MPa: 5 minutes ;
- descente de 13,2 kN 75 MPa à 0 kN: 30 minutes.

Le substrat a un diamètre de 15 mm et les forces appliquées de 5,3 kN et de 13,2 kN correspondent respectivement à des pressions de 25 MPa et 75 MPa.

Les montées progressives en température et en pression décrites plus haut, notamment dans le mode de réalisation préféré de ces montées en température, (où l'on met en oeuvre un chauffage intermédiaire jusqu'à une température de ramollissement), mentionné ci-dessus, permettent avec certitude d'éviter d'avoir recours à une étape thermique supplémentaire, comme c'est le cas dans l'art antérieur, pour obtenir le frittage définitif, d'obtenir ainsi directement en une seule étape le frittage de la poudre sur la surface, et d'améliorer encore plus la qualité du revêtement obtenu.

Il semblerait, en outre, que la géométrie des « trains » d'impulsion de courant ait également une influence sur la qualité du revêtement obtenu.

Le courant est appliqué sous forme de séries, trains d'impulsions (« pulses ») ; chaque série, train, est constitué d'un nombre déterminé et réglable de « pulses ». Les séries (trains) sont séparées entre elles par un temps pendant lequel le courant appliqué est nul.

Dans le procédé selon l'invention, on utilise généralement des impulsions de 1 à 5 ms, par exemple de 3,3 ms de période, assemblées généralement par train de 1 à 15, par exemple 12 impulsions, chaque train étant généralement séparé par 1 à 15 périodes, par exemple 3 périodes, de la durée (telle que 3,3 ms) ci-dessus, sans courant.

Il est possible de changer ces valeurs mais le courant doit toujours garder la même géométrie : à savoir des trains d'impulsions plus ou moins nombreux séparés par des périodes variables sans courant.

La tension appliquée est de quelques volts, généralement de 1 à 8 volts, de préférence de 2 à 7 volts, typiquement 5 volts.

A l'issue du refroidissement, généralement jusqu'à la température ambiante, par exemple de 20°C à 25°C, on récupère la pièce pourvue de son revêtement de PAO dans l'appareil de « SPS ».

Le procédé selon l'invention trouve son application dans tous les domaines où l'on souhaite réaliser des revêtements de protection contre l'oxydation denses et très réfractaires sur des surfaces de pièces.

Le procédé selon l'invention permet l'élaboration de revêtements de protection contre l'oxydation dans des domaines aussi divers que l'aéronautique, l'aérospatiale, l'industrie chimique et d'une manière générale dans tous les domaines où de très hautes températures sont rencontrées.

Dans tous ces domaines, la préparation de protections à l'oxydation, denses et très réfractaires n'avait jusqu'alors pu être réalisée.

L'invention va maintenant être décrite en référence aux exemples suivants, donnés à titre illustratif et non limitatif.

### EXEMPLES :

Dans ces exemples, on prépare deux revêtements de protection contre l'oxydation (PAO) par le procédé selon l'invention, sur des substrats carbonés.

Un premier revêtement de protection contre l'oxydation (PAO) est préparé par frittage par « SPS » d'une poudre de carbure d'hafnium (HfC) revêtue de carbure de silicium (SiC), sur un substrat carboné.

Un deuxième revêtement de protection contre l'oxydation (PAO) est préparé par frittage par « SPS » d'une poudre de carbure d'hafnium (HfC) revêtue de carbure de silicium (SiC), revêtue de Titane (Ti), sur un substrat carboné.

Les substrats carbonés sont des pastilles de graphite.

L'appareil de « SPS » utilisé est un appareil de type « SPS 2080 » commercialisé par la société SYNTEX®.

### Exemple 1 :

Dans cet exemple, on prépare un revêtement de protection contre l'oxydation (PAO) par frittage par « SPS » d'une poudre de carbure d'hafnium (HfC) revêtue de carbure de silicium (SiC), sur un substrat carboné.

La poudre de HfC revêtue de SiC est préparée à partir d'une poudre initiale de HfC qui présente un d₅₀ de 35 µm.

Le revêtement de SiC de la poudre est réalisé par dépôt chimique en phase vapeur (« CVD ») en lit fluidisé.

L'hexaméthyldisilane est utilisé comme précurseur du SiC pour favoriser le dépôt du SiC sur la poudre de HfC.

L'opération de dépôt est réalisée sous hydrogène (qui joue un rôle de transport et de réduction) et sous azote (qui joue le rôle de gaz de fluidisation), à environ 900°C.

L'opération de dépôt dure environ une journée en tenant compte de la montée et la descente en température.

Un des intérêts de la poudre de HfC revêtue de SiC provient de l'accord entre les coefficients de dilatation du SiC, du HfC et du substrat.

L'intérêt du SiC est de protéger le carbure d'hafnium de l'oxydation à basse température.

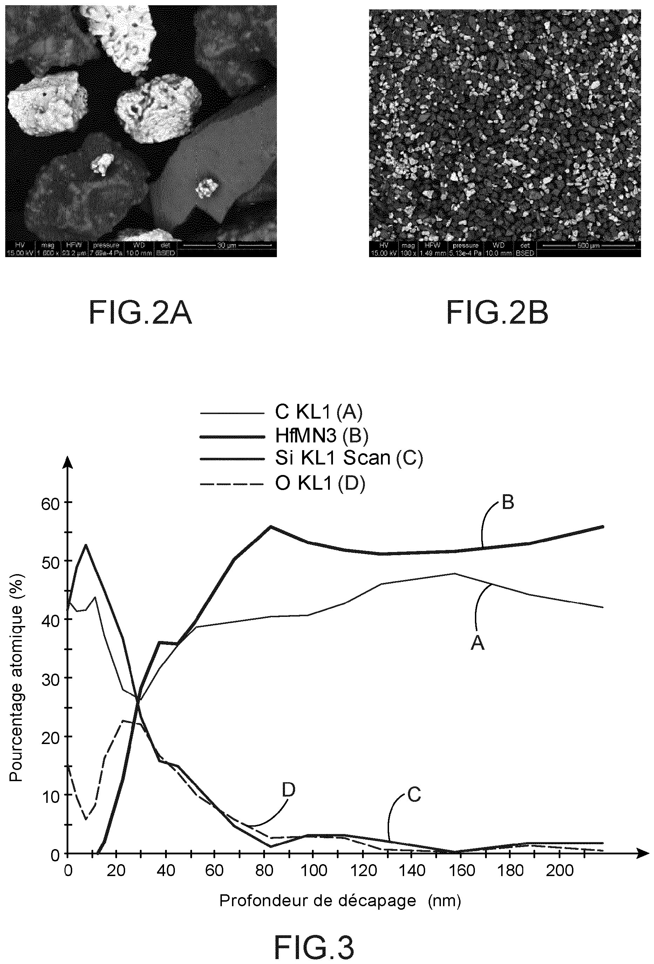

Les clichés de la poudre réalisés au MEB obtenus par électrons rétrodiffusés (voir Fig. 2A et 2B), et l'analyse de Spectrométrie en énergie (« Energy Dispersive Spectrometry » ou EDS), montrent l'existence de deux types de grains : les grains les plus sombres sont recouverts de SiC alors que les autres grains, plus clairs ne montrent que la présence d'HfC et un dépôt de SiC n'est pas visible.

Ces observations au MEB sont complétées par des analyses en Spectroscopie Auger qui montrent que, dans le cas d'un grain où le dépôt de SiC n'est pas visible au MEB (voir Figure 3), l'épaisseur du dépôt de SiC est d'environ 30 nm.

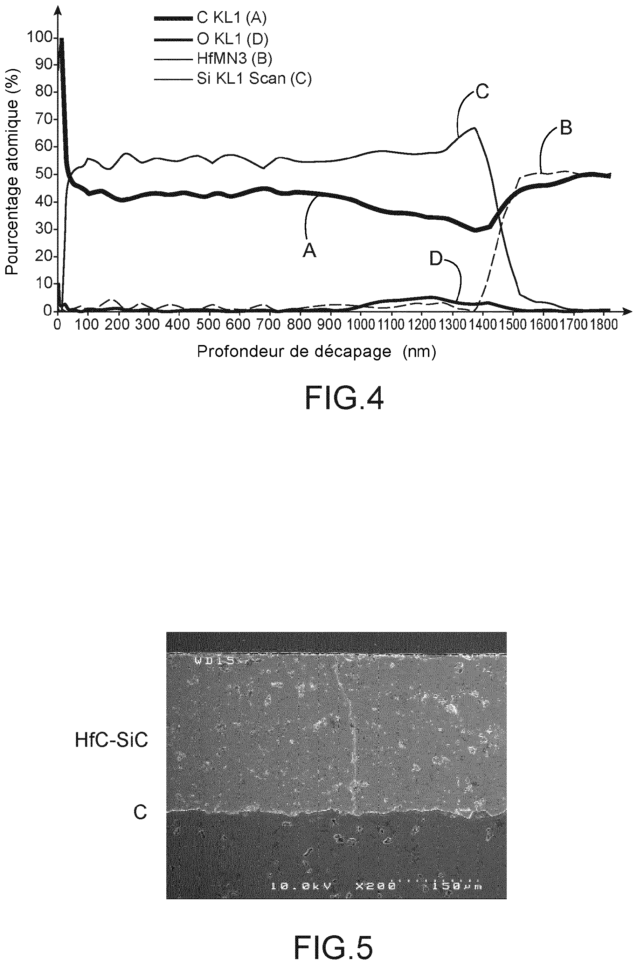

En revanche (voir Figure 4), dans le cas où le dépôt de SiC est visible au MEB, son épaisseur est d'environ 1500 nm.

La poudre de carbure d'hafnium (HfC) revêtue de carbure de silicium (SiC) préparée comme décrit ci-dessus, a été frittée par « SPS » dans l'appareil mentionné ci-dessus, sur un substrat carboné tel que décrit plus haut, et dans les conditions suivantes :
- Train d'impulsions : 3,3 ms.
- Montée en température de 300°C à 600°C en 3 minutes, soit à une vitesse de 100°C/min ;
- Montée en température de 600°C à 1850°C en 12 minutes, soit à une vitesse de 105°C/min ;
- Montée en température de 1850°C à 1950°C en 2 minutes, soit à une vitesse de 50°C/min ;
- Palier à 1950°C pendant 2 minutes et sous 75 MPa ;
Descente en température de 1950°C à la température ambiante : ce refroidissement est conditionné par l'inertie thermique du système.

Caractérisation du revêtement de protection contre l'oxydation (PAO) préparé.
- Observation visuelle.

Les revêtements obtenus présentent une bonne cohésion. L'observation visuelle ne révèle pas de défauts.
- Contrôle destructif : Observation au Microscope Électronique à Balayage.

On réalise une observation au Microscope Électronique à Balayage du revêtement de PAO sur le substrat carboné, après découpe et polissage. La Figure 5 présente une micrographie du revêtement, obtenue par MEB sur des surfaces polies après préparation métallographique.

On peut voir sur la Figure 5 que le dépôt est peu fissuré. Les fissures sont fines mais traversent toute la hauteur de la couche.
- Mesure de la densité par pesée hydrostatique.

Cette mesure est réalisée selon le protocole suivant :
- Relever la masse sèche ;
- Mettre l'échantillon dans l'eau ;
- Tirer au vide plusieurs heures ;
- Relever la masse dans l'eau ainsi que la masse de l'échantillon mouillé ;

On en déduit, grâce à la poussée d'Archimède la densité, la porosité ouverte et fermée du matériau.

Cette mesure a montré une densité du dépôt de l'ordre de 94%.

### Exemple 2 :

Dans cet exemple, on prépare un revêtement de protection contre l'oxydation (PAO) par frittage par « SPS » d'une poudre de carbure d'hafnium (HfC) revêtue de carbure de silicium (SiC), revêtu de Ti, sur un substrat carboné.

La poudre de carbure d'hafnium (HfC) revêtue de carbure de silicium (SiC), revêtu de Ti, est préparée en revêtant avec du titane la poudre de carbure d'hafnium (HfC) revêtue de carbure de silicium (SiC) préparée dans l'exemple 1.

Le revêtement de titane est réalisé par dépôt chimique en phase vapeur (« CVD ») en lit fluidisé.

Le précurseur utilisé est le chlorure de Titane, associé à un agent complexant.

La couche de Ti dont sont pourvues les particules de la poudre préparée dans cet exemple présente un double intérêt, à savoir :
- la couche de titane permet de faciliter le frittage ;
- au cours du frittage, le titane peut se carburer au contact du substrat carboné pour former du TiC, un carbure réfractaire, et promouvoir l'adhésion du revêtement au substrat.

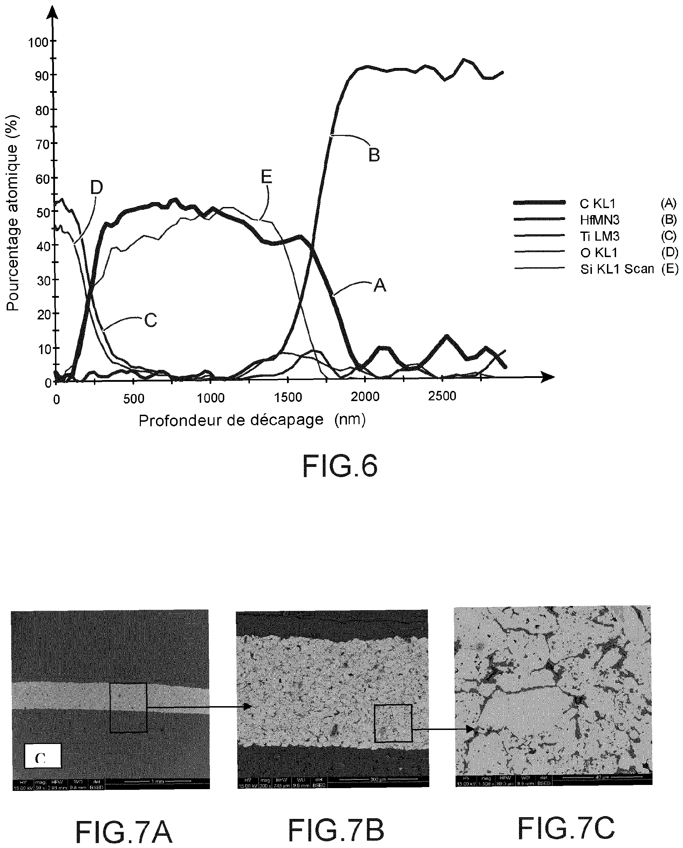

L'analyse en spectroscopie Auger de la poudre ainsi préparée (Figure 6) montre une épaisseur de titane relativement faible, de l'ordre de 100 nm à 200 nm.

La couche de SiC présente une épaisseur d'environ 1000 nm à 1200 nm.

La poudre de carbure d'hafnium (HfC) revêtue de carbure de silicium (SiC), revêtu de Titane, préparée comme décrit ci-dessus, a été frittée par « SPS » dans l'appareil mentionné ci-dessus, sur un substrat carboné tel que décrit plus haut, et dans les conditions suivantes :
- température de 1950°C pendant 5 minutes et sous 75 MPa ;
- train d'impulsions : 3,3 ms.
- Montée en température de 300°C à 600°C en 3 minutes, soit à une vitesse de 100°C/min ;
- Montée en température de 600°C à 1850°C en 12 minutes, soit à une vitesse de 105°C/min ;
- Montée en température de 1850°C à 1950°C en 2 minutes, soit à une vitesse de 50°C/min ;
- Palier à 1950°C pendant 2 minutes et sous 75 MPa ;
- Refroidissement de 1950°C à 600°C en 30 minutes, soit à une vitesse de refroidissement contrôlée à 45°C/min ;

Descente en température de 600°C à l'ambiante : Ce refroidissement est conditionné par l'inertie thermique du système.

Lors de cette opération de frittage par « SPS », il a été porté une attention particulière à la température d'application de la pression et à la rampe de refroidissement.

Le cycle de température a déjà été décrit en détail ci-dessus.

De manière simultanée au cycle de température, le cycle de pression observé lors de l'opération de frittage par SPS est le suivant :
- de 0 à 25 MPa : montée en 1 minute ;
- palier à 25 MPa : 15 minutes ;
- de 25 MPa à 75 MPa : montée en 1 minute ;
- palier à 75 MPa : 5 minutes ;
- descente de 75 MPa à 0 MPa: 30 minutes.
- Contrôle destructif : Observation au Microscope Électronique à Balayage.

On réalise une observation au Microscope Électronique à Balayage du revêtement de PAO sur le substrat carboné, après découpe et polissage. Les Figures 7A, 7B, et 7C présentent des micrographies du revêtement, obtenues par électrons rétrodiffusés, sur des surfaces polies après préparation métallographique.

Les Figures 7A, 7B et 7C présentent la microstructure du revêtement de PAO obtenu sur le substrat carboné à différentes échelles, plus précisément à des grossissements croissants respectivement de 50, 200 et 1500 pour les Figures 7A, 7B et 7C.

On peut constater sur les Figures 7A, 7B et 7C, que le dépôt d'une épaisseur de 500 µm n'est pas fissuré.

Quelques porosités, situées aux joints de grain sont présentes. Ces porosités sont dues à la forte granulométrie de la poudre initiale (d₅₀=35 µm) responsable d'un contact imparfait entre les grains.

En électrons rétrodiffusés (micrographies des Figures 7A, 7B et 7C), il est possible de voir une phase plus sombre, répartie de manière homogène aux joints de grain.
- Mesure de la densité par pesée hydrostatique.

La mesure est réalisée en observant le protocole déjà décrit plus haut.

Cette mesure a montré une densité du dépôt de l'ordre de 96%.
- Analyse par diffraction d'électrons rétrodiffusés (« Electron Backscatter Diffraction » ou EBSD en anglais).

Par analyse EBSD, la phase plus sombre, observée au MEB, mentionnée plus haut, a été identifiée comme étant du SiC.

Cette même analyse EBSD n'a pas permis de retrouver trace du titane. Cependant, la présence du titane permet une meilleure densification du dépôt (qui est 96% avec titane contre 94% sans titane dans l'exemple 1).

L'exemple 2 montre qu'il est possible d'obtenir une PAO HfC/SiC avec une microstructure tridimensionnelle et qui présente un accord parfait avec le substrat, sans fissure, avec un substrat carboné.

### Exemple 3 :

Dans cet exemple, des analyses thermogravimétriques (« ATG ») ont été réalisées sur la poudre de HfC brute (poudre sans revêtement décrite dans l'exemple 1) ainsi que sur la poudre de HfC revêtue de SiC (préparée dans l'exemple 1) et sur une poudre de SiC de granulométrie d₅₀=35µm identique aux précédentes.

L'analyseur est une thermobalance, plus exactement un appareil SETARAM TG 92® monofour équipé d'un thermocouple de type S.

Sous balayage d'air sec comprimé, les échantillons sont positionnés dans une canne d'analyse calorimétrique différentielle à compensation de puissance (« Differential Scanning Calorimetry » ou DSC en anglais).

La température maximale atteinte est de 1500°C et la cinétique de montée est fixée à 10°C/min.

La Figure 8 présente l'évolution de la prise de masse en fonction de la température.

La prise de masse est reliée directement à l'oxydation, plus la prise de masse est importante plus le matériau s'est oxydé.

La Figure 8 montre une prise de masse de plus de 10% pour le HfC brut (Courbe B), avec une oxydation qui débute dès 400°C et qui est catastrophique entre 500 et 600°C.

En revanche, comme attendu, le SiC (Courbe A) s'oxyde très peu (environ 1%). La poudre de HfC revêtue de SiC (Courbe C) s'oxyde à peine plus que le SiC (environ 1,5%). Ce résultat montre qu'avec une épaisseur de SiC comprise entre 30 et 1500 nm (Exemple 1), le HfC est parfaitement protégé contre l'oxydation et cela pour des durées relativement longues car l'ATG dure 2h30 minutes.

### RÉFÉRENCES

[1] D.W. Mc Kee, Chemistry and Physics of Carbon, Vol. 23, 173 (1991).
[2] US-A-3,503,118.
[3] FR-A-1475529.
[4] WO-A-93/013033.
[5] D.W. McKee, Carbon, 25, 551 (1987).
[6] US-A-3,775,137.
[7] US-A-5,750,450.
[8] US-A-4,668,583.
[9] K.H. Han, J. Electrochem. Soc. 134,1003 (1987).
[10] R.B. Kaplan and *al.,* US-A-5,283,109 (1994).
[11] US-A-3,241,956.
[12] US-A-3,250,892.

## Revendications

1. Procédé pour préparer un revêtement de protection contre l'oxydation sur au moins une surface d'au moins une pièce en au moins un matériau susceptible d'être oxydé, dans lequel on réalise les étapes successives suivantes :
a) on revêt chacune des particules d'une poudre en une première céramique choisie parmi les céramiques réfractaires et les céramiques qui résistent à l'oxydation, par au moins une couche choisie parmi les couches en une céramique réfractaire, les couches en une céramique qui résiste à l'oxydation, et les couches en un métal réfractaire, à la condition que le revêtement et la particule comprennent au moins une céramique qui résiste à l'oxydation, et au moins une céramique ou un métal réfractaire ;
b) on dépose la poudre sur la surface à revêtir de la pièce ;
c) on réalise un frittage de la poudre sur la surface de la pièce par un procédé de frittage à chaud avec un champ électrique pulsé ;
d) on refroidit la pièce, par exemple à une vitesse de 5°C à 600°C/minute, de préférence jusqu'à la température ambiante ;
e) on récupère la pièce refroidie, revêtue sur au moins une de ses surfaces par un revêtement monocouche réfractaire de protection contre l'oxydation, à microstructure tridimensionnelle ; ledit revêtement monocouche réfractaire de protection contre l'oxydation ayant de préférence une épaisseur de 4 nm à 1000 µm, de préférence encore de 10 nm à 600 µm ;
la céramique qui résiste à l'oxydation est différente de la céramique réfractaire ;
la céramique réfractaire est choisie parmi les carbures, nitrures, borures et oxydes des métaux de transition des colonnes IVb, Vb, et VIb du tableau périodique des éléments ; les mélanges de plusieurs desdits carbures, nitrures, borures et oxydes des métaux de transition des colonnes IVb, Vb, et VIb du tableau périodique des éléments entre eux, et les mélanges d'un ou de plusieurs desdits carbures, nitrures, borures et oxydes des métaux de transition des colonnes IVb, Vb, et VIb du tableau périodique des éléments et de SiC ; les céramiques composites desdits carbures, nitrures, borures et oxydes des métaux de transition des colonnes IVb, Vb, et VIb du tableau périodique des éléments entre eux, et les céramiques composites d'un ou de plusieurs desdits carbures, nitrures, borures et oxydes des métaux de transition des colonnes IVb, Vb, et Vlb du tableau périodique des éléments et de SiC ; de préférence la céramique réfractaire est choisie parmi les carbures de métaux HfC, ZrC, TiC, TaC, et WC ; les mélanges desdits carbures de métaux entre eux et les mélanges d'un ou de plusieurs desdits carbures de métaux avec SiC ; les céramiques composites desdits carbures de métaux entre eux, et les céramiques composites d'un ou de plusieurs desdits carbures de métaux avec SiC ; et
la céramique qui résiste à l'oxydation est choisie parmi les carbures, nitrures, borures et oxydes différents des carbures, nitrures, borures et oxydes des métaux de transition des colonnes IVb, Vb, et VIb du tableau périodique des éléments ; les mélanges de ceux-ci ; et les céramiques composites de ceux-ci ; de préférence la céramique qui résiste à l'oxydation est choisie parmi SiC et les céramiques composites de SiC.

2. Procédé selon la revendication 1, dans lequel, lors de l'étape c), on applique une pression suffisante à la pièce, et simultanément on applique un courant électrique pulsé suffisant à ladite pièce, pour élever la température de la pièce jusqu'à une température suffisante pour provoquer un frittage de la poudre sur la surface de la pièce, puis on cesse simultanément d'appliquer le courant électrique et la pression ; de préférence lors de l'étape c), on applique une pression, de 0,01 MPa à 500 MPa à ladite pièce, et simultanément, on applique un courant électrique pulsé d'une intensité de 1 à 50000 A à ladite pièce de façon à élever la température de la pièce jusqu'à une température, dite température de palier, comprise entre 1000°C et 2500°C.

3. Procédé selon l'une quelconque des revendications précédentes, dans lequel le matériau susceptible d'être oxydé est choisi parmi les matériaux à base de carbone tels que les matériaux composites carbone/carbone; les céramiques telles que les céramiques borures comme HfB₂, les céramiques carbures à l'exception de SiC comme TiC, ZrC, et HfC, les céramiques nitrures comme TiN et ZrN ; les céramiques composites telles que les composites SiC/SiC; les métaux ultraréfractaires tels que W ou Ta ; et les composites carbone /céramique tels que les composites C/SiC.

4. Procédé selon l'une quelconque des revendications précédentes, dans lequel, lors de l'étape a), la première céramique est une céramique réfractaire et on revêt chacune des particules de la poudre de la première céramique par une première couche en une deuxième céramique qui est une céramique qui résiste à l'oxydation, différente de la première céramique ; ou bien, lors de l'étape a), la première céramique est une céramique qui résiste à l'oxydation et on revêt chacune des particules de la poudre de la première céramique par une première couche en une deuxième céramique qui est une céramique réfractaire, différente de la première céramique.

5. Procédé selon la revendication 4, dans lequel on revêt en outre la première couche de la deuxième céramique par une deuxième couche en un métal réfractaire.

6. Procédé selon l'une quelconque des revendications 1 à 3, dans lequel, lors de l'étape a), la première céramique est une céramique qui résiste à l'oxydation, et on revêt chacune des particules de la première céramique par une première couche en un métal réfractaire.

7. Procédé selon la revendication 6, dans lequel, on revêt en outre la première couche en un métal réfractaire par une deuxième couche en une céramique qui est une céramique réfractaire.

8. Procédé selon l'une quelconque des revendications 5 et 7, dans lequel une ou plusieurs autre(s) couche(s) est (sont) prévue(s) sur la deuxième couche, deux couches successives étant de nature différente.

9. Procédé selon l'une quelconque des revendications précédentes, dans lequel la poudre en une première céramique, par exemple en une première céramique réfractaire, a une granulométrie moyenne de 1 nm à 1000 µm.

10. Procédé selon l'une quelconque des revendications précédentes, dans lequel la couche de la deuxième céramique a une épaisseur de 1 nm à 1000 µm.

11. Procédé selon l'une quelconque des revendications précédentes, dans lequel le métal réfractaire est choisi parmi Ti, Cr, Nb, V, Ta, Ir, Mo, Hf, Zr, Pt, Re ; leurs alliages ; et les mélanges de ces métaux et/ou alliages.

12. Procédé selon l'une quelconque des revendications précédentes, dans lequel la couche en un métal réfractaire a une épaisseur de 1 nm à 1000 µm.

13. Procédé selon l'une quelconque des revendications précédentes, dans lequel, lors de l'étape b), la poudre est déposée par un procédé choisi parmi la projection plasma, les procédés utilisant une suspension de la poudre ou barbotine, et la simple mise en contact de la poudre par voie sèche.

14. Procédé selon l'une quelconque des revendications 2 à 13, dans lequel la température de palier est maintenue pendant une durée de 0 à 10 minutes, de préférence de 0 à 7 minutes, par exemple de 5 minutes.

15. Procédé selon l'une quelconque des revendications précédentes, dans lequel la pression et la température sont élevées de manière progressive depuis la température ambiante et une pression de 0 MPa ; de préférence la température est élevée en réalisant une rampe, ou plusieurs rampes présentant éventuellement des pentes différentes, pour arriver jusqu'à la température de frittage ; de préférence encore la pression est élevée en réalisant une rampe, ou plusieurs rampes présentant éventuellement des pentes différentes, pour arriver jusqu'à la pression de frittage.

16. Procédé selon la revendication 15, dans lequel la température et la pression sont élevées de manière simultanée en une même durée.

17. Procédé selon l'une quelconque des revendications précédentes, dans lequel le courant électrique pulsé est appliqué sous la forme d'impulsions de 1 à 5 ms, par exemple de 3,3 ms de période, assemblées par trains de 1 à 15, par exemple de 12 impulsions, chaque train étant séparé par de 1 à 15 périodes, par exemple par 3 périodes.

## Patentansprüche

1. Verfahren zum Herstellen einer Schutzbeschichtung zum Schutz vor Oxidation auf zumindest einer Fläche von zumindest einem Werkstück aus zumindest einem oxidierbaren Material, wobei die nachstehenden, aufeinanderfolgenden Schritte erfolgen:
a) Beschichten jedes der Teilchen eines Pulvers aus einer ersten Keramik, ausgewählt aus feuerfesten Keramiken und oxidationsbeständigen Keramiken, mit zumindest einer Schicht, ausgewählt aus Schichten aus einer feuerfesten Keramik, Schichten aus einer oxidationsbeständigen Keramik und Schichten aus einem feuerfesten Metall, vorausgesetzt, dass die Beschichtung und das Teilchen zumindest eine oxidationsbeständige Keramik und zumindest eine feuerfeste Keramik oder ein feuerfestes Metall umfassen;
b) Aufbringen des Pulvers auf die zu beschichtende Oberfläche des Werkstücks;
c) Sintern des Pulvers auf der Werkstückoberfläche durch ein Heißsinterverfahren mit einem gepulsten elektrischen Feld (Spark Plasma Sintern Verfahren);
d) Abkühlen des Werkstücks, beispielsweise mit einer Geschwindigkeit von 5 °C bis 600 °C/Minute, vorzugsweise bis auf Raumtemperatur;
e) Gewinnen des abgekühlten Werkstücks, das auf zumindest einer seiner Oberflächen mit einer feuerfesten, einschichtigen Schutzbeschichtung zum Schutz vor Oxidation und mit einer dreidimensionalen Mikrostruktur beschichtet ist; wobei die feuerfeste einschichtige Schutzbeschichtung zum Schutz vor Oxidation vorzugsweise eine Dicke von 4 nm bis 1000 µm, bevorzugter 10 nm bis 600 µm, aufweist;
wobei die oxidationsbeständige Keramik sich von der feuerfesten Keramik unterscheidet;
wobei die feuerfeste Keramik ausgewählt ist aus Carbiden, Nitriden, Boriden und Oxiden der Übergangsmetalle der Spalten IVb, Vb, und Vlb des Periodensystems der Elemente; Gemischen aus mehreren der genannten Carbiden, Nitriden, Boriden und Oxiden der Übergangsmetalle der Spalten IVb, Vb, und Vlb des Periodensystems der Elemente untereinander, und aus Gemischen eines oder mehrerer genannten der Carbide, Nitride, Boride und Oxide der Übergangsmetalle der Spalten IVb, Vb, und und Vlb des Periodensystems der Elemente und aus SiC; Verbundkeramiken aus den genannten Carbiden, Nitriden, Boriden und Oxiden der Übergangsmetalle der Spalten IVb, Vb, Vlb des Periodensystems der Elemente untereinander und den Verbundkeramiken aus einem oder mehreren der genannten Carbiden, Nitriden, Boriden und Oxiden der Übergangsmetalle der Spalten IVb, Vb, Vlb des Periodensystems der Elemente und aus SiC; wobei die feuerfeste Keramik vorzugsweise ausgewählt ist aus den Metallcarbiden HfC, ZrC, TiC, TaC und WC; den Gemischen der genannten Metallcarbide untereinander und den Gemischen aus einem oder mehreren der genannten Metallcarbide mit SiC; den Verbundkeramiken aus den genannten Metallcarbiden untereinander, und den Verbundkeramiken aus einem oder mehreren der genannten Metallcarbide mit SiC; und die oxidationsbeständige Keramik ausgewählt ist aus Carbiden, Nitriden, Boriden und Oxiden, die sich von den Carbiden, Nitriden, Boriden und Oxiden der Übergangsmetalle der Spalten IVb, Vb, Vlb des Periodensystems der Elemente unterscheiden; deren Gemischen; und deren Verbundkeramiken; wobei vorzugsweise die oxidationsbeständige Keramik ausgewählt ist aus SiC und den Verbundkeramiken aus SiC.

2. Verfahren nach Anspruch 1, wobei in Schritt c) ein ausreichender Druck auf das Werkstück aufgebracht wird und gleichzeitig ein ausreichender gepulster, elektrischer Strom an das Werkstück angelegt wird, um die Temperatur des Werkstücks auf eine ausreichende Temperatur zu erhöhen, um ein Sintern des Pulvers auf der Oberfläche des Werkstücks zu bewirken, dann gleichzeitig das Anlagen von elektrischem Strom und Aufbringen von Druck unterbrochen werden; wobei vorzugsweise in Schritt c) ein Druck von 0,01 MPa bis 500 MPa auf das Werkstück aufgebracht wird und gleichzeitig ein gepulster, elektrischer Strom mit einer Stärke von 1 bis 50000 A an das Werkstück angelegt wird, so dass die Temperatur des Werkstücks auf eine Temperatur, Stufentemperatur genannt, erhöht wird, die zwischen 1000 °C und 2500 °C liegt.

3. Verfahren nach einem der vorangehenden Ansprüche, wobei das oxidierbare Material ausgewählt ist aus Materialien auf Kohlenstoffbasis, wie Kohlenstoff/Kohlenstoff-Verbundmaterialien; Keramiken wie Boridkeramiken, wie HfB₂, Carbidkeramiken mit Ausnahme von SiC, wie TiC, ZrC und HfC, Nitridkeramiken, wie TiN und ZrN; Verbundkeramiken, wie SiC/SiC-Komposite; ultrahochschmelzenden (ultrafeuerfesten) Metallen, wie W oder Ta; und Kohlenstoff/Keramik-Verbundwerkstoffen, wie C/SiC-Verbundwerkstoffe.

4. Verfahren nach einem der vorangehenden Ansprüche, wobei in Schritt a) die erste Keramik ist eine feuerfeste Keramik ist und jedes der Teilchen des Pulvers der ersten Keramik mit einer ersten Schicht aus einer zweiten Keramik beschichtet wird, die eine von der ersten Keramik sich unterscheidende Keramik ist, und die eine oxidationsbeständige Keramik ist; oder in Schritt a) die erste Keramik eine oxidationsbeständige Keramik ist und jedes der Teilchen des Pulvers der ersten Keramik mit einer ersten Schicht aus einer zweiten Keramik beschichtet wird, die eine von der ersten Keramik sich unterscheidende Keramist, und die eine feuerfeste Keramik ist.

5. Verfahren nach Anspruch 4, wobei ferner die erste Schicht aus der zweiten Keramik mit einer zweiten Schicht aus einem feuerfesten Metall beschichtet wird.

6. Verfahren nach einem der Ansprüche 1 bis 3, wobei in Schritt a) die erste Keramik eine oxidationsbeständige Keramik ist und jedes der Teilchen der ersten Keramik mit einer ersten Schicht aus einem feuerfesten Metall beschichtet wird.

7. Verfahren nach Anspruch 6, wobei ferner die erste Schicht aus einem feuerfesten Metall mit einer zweiten Schicht aus einer Keramik beschichtet wird, die eine feuerfeste Keramik ist.

8. Verfahren nach einem der Ansprüche 5 und 7, wobei eine oder mehrere weitere Schicht(en) auf der zweiten Schicht vorgesehen wird/werden, wobei zwei aufeinanderfolgende Schichten von unterschiedlicher Beschaffenheit (Natur) sind.

9. Verfahren nach einem der vorangehenden Ansprüche, wobei das Pulver aus einer ersten Keramik, beispielsweise aus einer ersten feuerfesten Keramik, eine mittlere Teilchengröße von 1 nm bis 1000 µm aufweist.

10. Verfahren nach einem der vorangehenden Ansprüche, wobei die Schicht aus der zweiten Keramik eine Dicke von 1 nm bis 1000 µm aufweist.

11. Verfahren nach einem der vorangehenden Ansprüche, wobei das feuerfeste Metall ausgewählt ist aus Ti, Cr, Nb, V, Ta, Ir, Mo, Hf, Zr, Pt, Re; deren Legierungen; und den Gemischen dieser Metalle und/oder Legierungen.

12. Verfahren nach einem der vorangehenden Ansprüche, wobei die Schicht aus einem feuerfesten Metall eine Dicke von 1 nm bis 1000 µm aufweist.

13. Verfahren nach einem der vorangehenden Ansprüche, wobei in Schritt b) das Pulver aufgebracht wird durch ein Verfahren ausgewählt aus Plasmaspritzen, Verfahren unter Verwendung von einer Suspension aus Pulver bzw. Schlicker, und dem einfachen, trockenen Inkontaktbringen des Pulvers.

14. Verfahren nach einem der Ansprüche 2 bis 13, wobei die Stufentemperatur für eine Dauer von 0 bis 10 Minuten, vorzugsweise von 0 bis 7 Minuten, beispielsweise 5 Minuten, gehalten wird.

15. Verfahren nach einem der vorangehenden Ansprüche, wobei der Druck und die Temperatur von der Raumtemperatur und einem Druck von 0 MPa progressiv erhöht werden; wobei die Temperatur vorzugsweise unter Ausbildung einer Rampe oder mehrerer Rampen erhöht wird, die gegebenenfalls unterschiedliche Neigungen haben, um auf die Sinterungstemperatur zu gelangen; wobei vorzugsweise der Druck unter Ausbildung einer Rampe oder mehrerer Rampen erhöht wird, die gegebenenfalls unterschiedliche Neigungen haben, um auf den Sinterdruck zu gelangen.

16. Verfahren nach Anspruch 15, wobei die Temperatur und der Druck gleichzeitig in einer gleichen Zeitdauer erhöht werden.

17. Verfahren nach einem der vorangehenden Ansprüche, wobei der gepulste elektrische Strom in Form von Impulsen mit einer Periode von 1 bis 5 ms, beispielsweise 3,3 ms angelegt wird, die durch Impulsfolgen von 1 bis 15, beispielweise 12 Impulsen zusammengesetzt sind, wobei jede Folge mit 1 bis 15 Perioden, beispielsweise 3 Perioden, getrennt ist.

## Claims

1. A method for preparing a protective coating against oxidation on at least one surface of at least one part made of at least one material capable of being oxidized, wherein the following successive steps are carried out:
a) each of the particles of a powder made of a first ceramic selected from refractory ceramics and ceramics which resist oxidation is coated with at least one layer selected from layers made of a refractory ceramic, layers made of a ceramic which resists oxidation, and layers made of a refractory metal, provided that the coating and the particle comprise at least one ceramic which resists oxidation, and at least one refractory ceramic or metal;
b) the powder is deposited onto the surface to be coated of the part;
c) sintering of the powder is achieved on the surface of the part by a Spark Plasma Sintering (SPS) method;
d) the part is cooled, for example at a rate from 5°C to 600°C/minute, preferably down to room temperature;
e) the cooled part, coated on at least one of its surfaces with a protective refractory monolayer coating against oxidation, with a three-dimensional microstructure, is recovered; said protective refractory monolayer coating against oxidation having preferably a thickness from 4 nm to 1,000 µm, preferably from 10 nm to 600 µm ; the ceramic which resists oxidation is different from the refractory ceramic ; the refractory ceramic is selected from carbides, nitrides, borides and oxides of transition metals of the columns IVb, Vb and VIb of the Periodic Table of the Elements; mixtures of several of said carbides, nitrides, borides and oxides of transition metals of the columns IVb, Vb, and VIb of the Periodic Table of the Elements, with each other, and mixtures of one or several of said carbides, nitrides, borides and oxides of transitions metals of the columns IVb, Vb and VIb of the Periodic Table of the Elements and of SiC; composite ceramics of said carbides, nitrides, borides and oxides of transition metals of the columns IVb, Vb and VIb of the Periodic Table of the Elements, with each other, and composite ceramics of one or several of said carbides, nitrides, borides and oxides of transition metals of the columns IVb, Vb and VIb of the Periodic Table of the Elements and of SiC ; preferably the refractory ceramic is selected from the metal carbides, HfC, ZrC, TiC, TaC, and WC; mixtures of said metal carbides with each other and mixtures of one or several of said metal carbides with SiC; composite ceramics of said metal carbides with each other, and composite ceramics of one or several of said metal carbides with SiC ; and the ceramic which resists oxidation is selected from carbides, nitrides, borides and oxides different from the carbides, nitrides, borides and oxides of transition metals of the columns IVb, Vb and VIb of the Periodic Table of the Elements; mixtures thereof; and composite ceramics thereof ; preferably the ceramic which resists oxidation is selected from SiC and composite SiC ceramics.

2. The method according to claim 1, wherein, during step c), a sufficient pressure is applied to the part, and simultaneously a sufficient pulsed electric current is applied to said part, in order to raise the temperature of the part up to a sufficient temperature for causing sintering of the powder on the surface of the part, and then simultaneously, application of the electric current and of the pressure is stopped ; preferably during step c), a pressure from 0.01 MPa to 500 MPa is applied to said part, and simultaneously a pulsed electric current with an intensity from 1 to 50,000 A is applied to said part so as to raise the temperature of the part up to a temperature, a so-called plateau temperature, comprised between 1,000°C and 2,500°C.

3. The method according to any one of the preceding claims, wherein the material capable of being oxidized is selected from materials based on carbon such as carbon/carbon composite materials; ceramics such as boride ceramics like HfB₂, carbide ceramics except for SiC such as TiC, ZrC, and HfC, nitride ceramics such as TiN and ZrN; composite ceramics such as SiC/SiC composites; ultra refractory metals such as W or Ta; and carbon/ceramic composites such as C/SiC composites.

4. The method according to any one of the preceding claims, wherein, during step a), the first ceramic is a refractory ceramic and each of the particles of the powder of the first ceramic is coated with a first layer made of a second ceramic which is a ceramic which resists oxidation, different from the first ceramic ; or else, during step a), the first ceramic is a ceramic which resists oxidation and each of the particles of the powder of the first ceramic is coated with a first layer made of a second ceramic which is a refractory ceramic, different from the first ceramic.

5. The method according to claim 4, wherein the first layer of the second ceramic is further coated with a second layer made of a refractory metal.

6. The method according to any one of claims 1 to 3, wherein, during step a), the first ceramic is a ceramic which resists oxidation, and each of the particles of the first ceramic is coated with a first layer made of a refractory metal.

7. The method according to claim 6, wherein, the first layer made of a refractory metal is further coated with a second layer made of a ceramic which is a refractory ceramic.

8. The method according to any one of claims 5 and 7, wherein one or several other layer(s) is (are) provided on the second layer, two successive layers being of different nature.

9. The method according to any one of the preceding claims, wherein the powder made of a first ceramic, for example made of a first refractory ceramic, has an average grain size from 1 nm to 1,000 µm.

10. The method according to any one of the preceding claims, wherein the layer of the second ceramic has a thickness from 1 nm to 1,000 µm.

11. The method according to any of the preceding claims, wherein the refractory metal is selected from Ti, Cr, Nb, V, Ta, Ir, Mo, Hf, Zr, Pt, Re; alloys thereof; and mixtures of these metals and/or alloys.

12. The method according to any one of the preceding claims, wherein the layer made of a refractory metal has a thickness from 1 nm to 1,000 µm.

13. The method according to any one of the preceding claims, wherein, during step b), the powder is deposited with a method selected from plasma spraying, methods using a suspension of the powder or a slurry, and the simple putting into contact of the powder via a dry route.

14. The method according to any one of claims 2 to 13, wherein the plateau temperature is maintained for a period of time from 0 to 10 minutes, preferably from 0 to 7 minutes, for example 5 minutes.

15. The method according to any one of the preceding claims, wherein the pressure and the temperature are gradually raised from room temperature and from a pressure of 0 MPa; preferably the temperature is raised by carrying out a ramp, or several ramps possibly having different slopes, in order to reach the sintering temperature; more preferably the pressure is raised by carrying out a ramp, or several ramps possibly having different slopes, in order to reach the sintering pressure.

16. The method according to claim 15, wherein the temperature and pressure are raised simultaneously within a same period of time.

17. The method according to any one of the preceding claims, wherein the pulsed electric current is applied in the form of pulses with a period of 1 to 5 ms, for example 3.3 ms, assembled as trains from 1 to 15, for example 12 pulses, each train being separated by 1 to 15 periods, for example by 3 periods.
